(19) Europäisches Patentamt / European Patent Office / Office européen des brevets

(11) **EP 4 657 874 A1**

(12) **EUROPEAN PATENT APPLICATION**

(43) Date of publication:
03.12.2025 Bulletin 2025/49

(21) Application number: 25159353.9

(22) Date of filing: 21.02.2025

(51) International Patent Classification (IPC):
*H04N 25/773* (2023.01)    *H04N 25/40* (2023.01)
*H04N 25/78* (2023.01)    *H04N 25/79* (2023.01)

(52) Cooperative Patent Classification (CPC):
H04N 25/773; H04N 25/40; H04N 25/78;
H04N 25/79

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2024 JP 2024088692

(71) Applicant: Samsung Electronics Co., Ltd.
Suwon-si, Gyeonggi-do 16677 (KR)
(72) Inventors:
• OTAKA, Toshinori
Yokohama-shi, Kanagawa, 230-0027 (JP)
• KUDO, Yoshiharu
Yokohama-shi, Kanagawa, 230-0027 (JP)

(74) Representative: Kuhnen & Wacker
Patent- und Rechtsanwaltsbüro PartG mbB
Prinz-Ludwig-Straße 40A
85354 Freising (DE)

(54) **PHOTOELECTRIC CONVERSION DEVICE**

(57)    The present disclosure aims to provide a photoelectric conversion device (100) capable of suppressing an increase in power consumption of a SPAD pixel. For example, a photoelectric conversion device (100) may include an avalanche photodiode (211) including an anode and (221) a cathode in each pixel of a pixel array (120). The photoelectric conversion device (100) may include a recharger (221) configured to recharge the anode or the cathode once per unit exposure time, a gating circuit (222) configured to generate a pulse signal based on an output of the avalanche photodiode (211) at a plurality of different timings within the unit exposure time, and a counter (223) configured to count the pulse signal from the gating circuit (222).

## FIG. 1

**Description**

**BACKGROUND**

**(a) Field**

The present disclosure relates to a photoelectric conversion apparatus.

**(b) Description of the Related Art**

Recently, photoelectric conversion devices (image sensors) using single-photon avalanche diodes (SPADs) have attracted attention. The SPADs use avalanche amplification, in which a large number of carriers are generated when a single photon is incident on a PN junction to which a reverse bias exceeding a breakdown voltage is applied in an avalanche photodiode (hereinafter also referred to as an "APD"). Photoelectric conversion devices using a SPAD have an APD in each of a plurality of pixels arranged in a row direction and a column direction. Photoelectric conversion devices using the SPAD acquire images by counting pulses generated based on a carrier signal produced by avalanche amplification in such APDs.

Photoelectric conversion devices using the SPAD acquire images by counting incident single photons, which have the advantage that good images are obtained even in dark places (low illumination). Meanwhile, conventional photoelectric conversion devices using a SPAD may cause an increase in circuit size and power consumption due to an increase in the count in bright locations (high illumination).

In this regard, for example, Non-Patent Document 1 identified below discloses a photoelectric conversion device of a clock-synchronous recharge type, which aims to suppress an increase in circuit size and power consumption when photographing bright places. In general, the appearance of photons within a unit time of natural light or artificial light that has undergone multiple reflections or diffusions, i.e. the time at which photons enter a photoelectric conversion apparatus, are uncorrelated and are random due to their non-interfering and memoryless properties. Accordingly, the probability density of photon occurrence becomes constant, and the frequency of photon occurrence increases or decreases in proportion to the illumination. Additionally, a deviation of this occurrence frequency is known to follow a Poisson distribution, which is the root cause of the so-called optical shot noise. Meanwhile, it is known that an interval at which photons reach a photoelectric conversion device follows an exponential distribution, regardless of the intensity of the illumination. In the photoelectric conversion device of Non-Patent Document 1, time divisions assuming low, medium, and high illumination are sequentially set within 1 frame, and the interval of the recharge operations is configured to become shorter as the illumination increases in order to expand a dynamic range on the medium and high illumination side. The recharge operation is an operation of supplying an excess voltage required to the APD to operate it as a SPAD.

Non-Patent Document 1: T. Takatsuka et al., "A 3.36µm-pitch SPAD photon-counting image sensor using clustered multi-cycle clocked recharging technique with intermediate most-significant-bit readout," 2023 IEEE Symposium on VLSI Technology and Circuits, C15-2, Kyoto,2023.

**SUMMARY**

However, in the photoelectric conversion device of Non-Patent Document 1, there is still a problem of increased power consumption because more recharge operations are required for time division assuming high illumination. In addition, in terms of time division assuming high illumination, a cycle of a recharge operation becomes very short, so there are also the problems that power consumption fluctuates greatly and it is difficult to expand to multi-pixel. In addition, in time division assuming high illumination, a large number of counts occur in a very short period of time, so it is generally necessary to increase a number of bits of an in-pixel counter in order to count without omission. Thus, there is also the problem that it becomes difficult to miniaturize pixels. In addition, in the method of sequentially scanning with different sensitivities in series along the time axis, a strong trade-off relationship occurs between expanding the dynamic range and a frame rate, making it difficult to output low-bit images at a high frame rate. Accordingly, it becomes difficult to apply image processing techniques to improve image quality of, e.g., motion pictures.

The present disclosure has been made to address the above-described issues. Therefore, an important object of the present disclosure is to provide a photoelectric conversion device capable of suppressing an increase in power consumption of a pixel.

In addition, another object of the present disclosure is to provide a photoelectric conversion device capable of suppressing fluctuations in power consumption of a pixel.

Moreover, another object of the present disclosure is to provide a photoelectric conversion device capable of suppressing an increase in a circuit size of a pixel.

In addition, another object of the present disclosure is to provide a photoelectric conversion device capable of outputting a binary low bit image at a high frame rate without depending on a degree to which the dynamic range for illumination is expanded.

According to some embodiments, a photoelectric conversion device may include an avalanche photodiode including an anode and a cathode in each pixel of a pixel array. The device may include a recharger configured to recharge the anode or the cathode once per unit exposure time, a gating circuit configured to generate a pulse signal based on an output of the avalanche photodiode at a plurality of different timings within the unit exposure time, and a counter configured to count the pulse signal from the gating circuit

According to the photoelectric conversion device of the present disclosure, it may be possible to suppress increases and fluctuations in power consumption of a pixel, while suppressing increases in a circuit size of the pixel. In addition, according to the photoelectric conversion device of the present disclosure, low bit images may be output at a high frame rate regardless of a degree to which a dynamic range for illumination is expanded.

## BRIEF DESCRIPTION OF THE DRAWINGS

FIG. 1 illustrates a schematic block diagram showing an example configuration of a photoelectric conversion device according to a first embodiment.

FIG. 2 illustrates a functional block diagram showing an example function provided by pixels shown in FIG. 1.

FIG. 3 illustrates a schematic view showing a time aperture imaging algorithm in the first embodiment.

FIG. 4 illustrates an example amount of information related to a number of photons per recharge depending on a sensitivity channel used.

FIG. 5 illustrates a schematic diagram showing an example concept model of incident photon detection using a time aperture imaging algorithm that realizes multiple sensitivities.

FIG. 6 illustrates example count values according to illumination.

FIG. 7 illustrates an example dynamic range expansion and an example number of intra-pixel counter bits corresponding to various combinations of time aperture ratios for sensitivity channels.

FIG. 8 illustrates an example graph showing a sensitivity channel transfer function and a normalized aggregated transfer function.

FIG. 9 illustrates an example count value according to illumination and an example dominant sensitivity channel for each illumination.

FIG. 10 illustrates a graph showing an example of SNR and DR magnification.

FIG. 11 illustrates a graph showing another example where SNR Dip occurs in SNR and DR magnification.

FIG. 12 illustrates a schematic view for describing conversion of time aperture imaging parameters according to an imaging illumination condition.

FIG. 13 illustrates an example of setting a sensitivity ratio between each sensitivity channel.

FIG. 14 illustrates a schematic view showing an example case where an image is reconstructed by performing correction processing on pixel data.

FIG. 15 illustrates a schematic view showing an example case where an image is reconstructed by simply adding pixel data.

FIG. 16 illustrates a block diagram showing an example schematic configuration of a signal processor shown in FIG. 1.

FIG. 17 illustrates a circuit diagram showing an example case where pixel hardware is configured as a two-layer substrate.

FIG. 18 illustrates a timing chart for describing an operation of a pixel circuit shown in FIG. 17.

FIG. 19 illustrates a circuit diagram showing an example equivalent circuit for calculating power consumption at a cathode node of a SPAD.

FIG. 20 illustrates a timing chart showing example charge and discharge operations in the equivalent circuit shown in FIG. 19.

FIG. 21 illustrates a schematic view showing an example variation of power consumption in imaging by a time aperture imaging algorithm.

FIG. 22 illustrates a schematic view showing an example variation of power consumption in imaging by a conventional clock synchronous recharge method as a comparative example.

FIG. 23 illustrates a schematic view showing an example count number of counters within a pixel per exposure time unit in imaging using a time aperture imaging algorithm.

FIG. 24 illustrates a schematic view showing an example count number of counters within a pixel per cluster in imaging by a conventional clock-synchronous recharge method as a comparative example.

FIG. 25 illustrates a circuit diagram showing an example case in which pixel hardware is configured as a three-layer substrate in a photoelectric conversion device according to a second embodiment.

FIG. 26 illustrates a timing chart for describing an operation of a pixel circuit shown in FIG. 25.

FIG. 27 illustrates a circuit diagram showing an example pixel and an example data accumulator in a two-layer configuration according to a third embodiment.

FIG. 28 illustrates a schematic block diagram showing an example layer configuration of pixels.

FIG. 29 illustrates a circuit diagram showing a modified example of a gating circuit according to a fourth embodiment.

FIG. 30 illustrates a timing chart showing example operations of a recharge circuit and a gating circuit shown in FIG. 29.

FIG. 31 illustrates a schematic view for describing detection of photons by a low-sensitivity channel in a low-illumination condition according to a fifth embodiment.

FIG. 32 illustrates a circuit diagram showing an example SPAD pixel that enables a low-sensitivity channel in a three-layer configuration.

FIG. 33 illustrates a timing chart showing an example operation of a pixel circuit of the SPAD pixel shown in FIG. 32.

FIG. 34 is a circuit diagram showing a first gating circuit using a logic circuit different from that of the example of FIG. 32.

FIG. 35 illustrates a circuit diagram showing an example SPAD pixel having a function for determining whether to adaptively use a low-sensitivity channel in a two-layer configuration.

FIG. 36 illustrates a timing chart for describing determination of an amount of incident light based on an incidence rate of photons.

FIG. 37 illustrates a circuit diagram showing a modified example of a threshold determining circuit in a SPAD pixel that enables a low-sensitivity channel.

FIG. 38 illustrates a block diagram showing an example configuration for separating high-sensitivity and low-sensitivity count values from pixel data.

FIG. 39 illustrates a schematic view showing a method of separating high-sensitivity and low-sensitivity count values from pixel data.

FIG. 40 illustrates a schematic view showing an example relationship between a pixel value, a high-sensitivity count value, and a low-sensitivity count value.

## DETAILED DESCRIPTION

Hereinafter, embodiments of the present disclosure will be described in detail with reference to the attached drawings. In the drawings below, identical reference numerals represent identical components, and the sizes of each component in the drawings are expressed at a different scale than in reality for clarity and convenience of description. Meanwhile, the embodiments described below are merely exemplary, and various modifications are possible from such embodiments.

In the following, the part described as "upper" or "above" may include not only the part directly above in contact, but also the part above in non-contact.

A component expressed in the singular includes plural components unless the context clearly indicates otherwise. In addition, when a part is said to "include" or "have" a component, this does not exclude other components, unless otherwise specifically stated, but rather may include other components. Therefore, throughout the specification, when a component is described as "including" a particular element or group of elements, it is to be understood that the component is formed of only the element or the group of elements, or the element or group of elements may be combined with additional elements to form the component, unless the context indicates otherwise. The term "consisting of," on the other hand, indicates that a component is formed only of the element(s) listed.

Items described in the singular herein may be provided in plural, as can be seen, for example, in the drawings. Thus, the description of a single item that is provided in plural should be understood to be applicable to the remaining plurality of items unless context indicates otherwise. For the steps that constitute a method, the order is explicitly stated, or, if there is no contrary statement, the steps are executed in the appropriate order. However, the order is not necessarily limited to the order in which the steps are described. Any use of examples or exemplary terms (e.g., etc.) is intended merely to illustrate technical ideas and is not intended to limit the scope of the patent claims, unless otherwise limited by such examples or exemplary terms.

Terms such as "same," "equal," etc. as used herein when referring to features such as orientation, layout, location, shapes, sizes, compositions, amounts, timings, or other measures do not necessarily mean an exactly identical feature but is intended to encompass nearly identical features including typical variations that may occur resulting from conventional manufacturing processes. The term "substantially" may be used herein to emphasize this meaning.

(First Embodiment)

<Configuration example of photoelectric conversion apparatus>

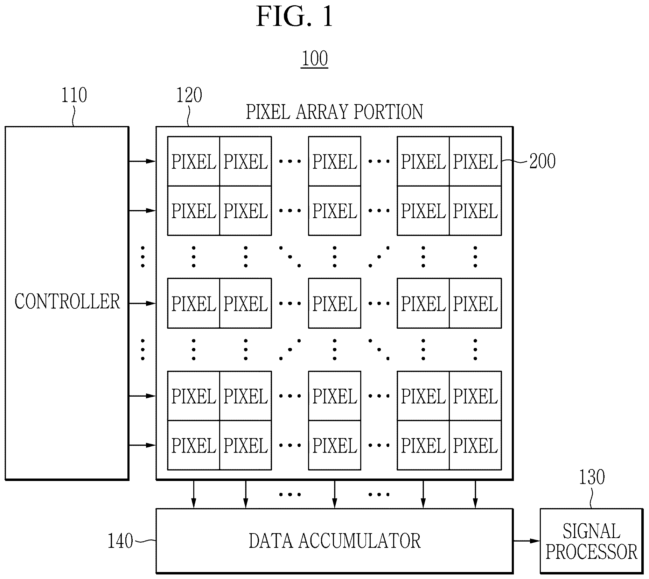

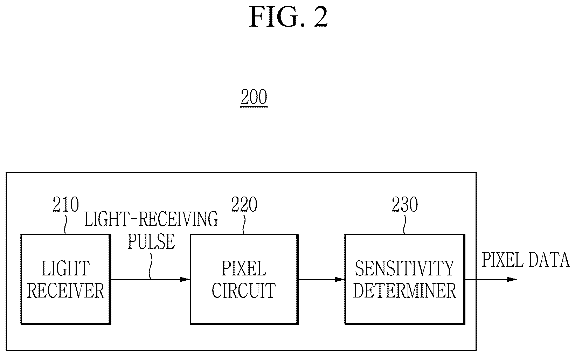

FIG. 1 illustrates a schematic block diagram showing an example configuration of a photoelectric conversion device according to a first embodiment. In addition, FIG. 2 illustrates a functional block diagram showing an example function provided by pixels shown in FIG. 1.

As shown in FIG. 1, the photoelectric conversion device 100 may include a controller 110, a pixel array portion 120, a data accumulator 140, and a signal processor 130.

The controller 110 may supply various signals to the pixel array portion 120 to control the pixel array portion 120. The controller 110 may generate or input various signals such as clock signals, reset signals, and control signals. The control signals may include, e.g., an RSTB signal, a recharge signal, a SEL signal, a CHK signal, a BITSEL signal, an EN_LS signal, a CHK_LS signal, a CHK_HS signal, an HLD signal, an FBK signal, an EN_APD signal, etc. Detailed descriptions of each of the signals will be provided later. Although not illustrated, the controller 110 and other controllers or processors described herein, can include one or more of the following components: at least one central processing unit (CPU) configured to execute computer program instructions to perform various processes and methods, random access memory (RAM) and read only memory (ROM) configured to access and store data and information and computer program instructions (e.g., such as, for example, RAM, ROM, programmable read-only memory (PROM), erasable programmable read-only memory (EPROM), electrically erasable programmable read-only memory (EEPROM)) where data and/or instructions can be stored.

The pixel array portion 120 may include a pixel array, which may include a plurality of (e.g., m) pixels 200 arranged in a two-dimensional grid shape (in the row direction and in the column direction) in a plan view from a direction perpendicular to a substrate surface of the photoelectric conversion device 100. Herein, m is a natural number that is greater than or equal to 2.

The signal processor 130 may perform a predetermined image processing on pixel data from the pixel array portion 120, and may output a processing result thereof. The predetermined image processing may include, e.g., demosaic processing, auto-white-balance (AWB) processing, noise reduction processing, lens shading correction processing, etc., in addition to linearization processing of an aggregated transfer function of the present disclosure described below.

[Overview of configuration of pixel 200]

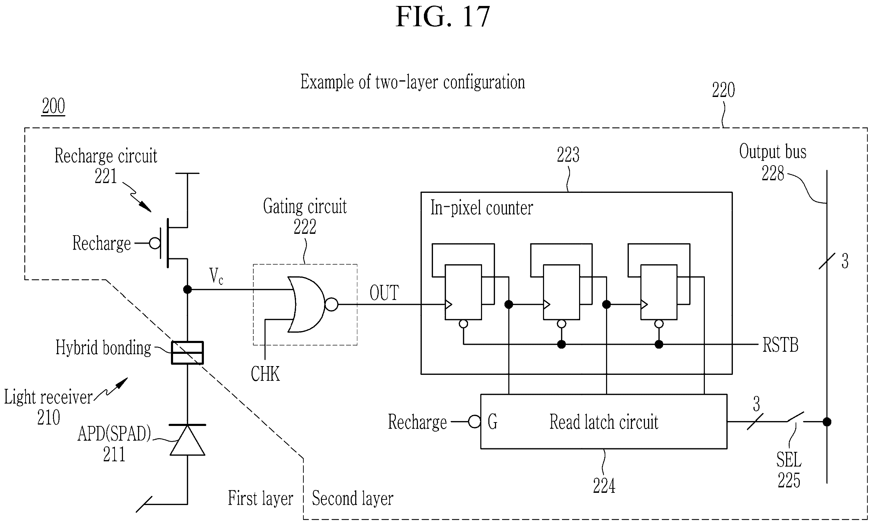

As shown in FIG. 2, each pixel 200 may include a light receiver 210, a pixel circuit 220, and a sensitivity determiner (operation processor) 230. In the present embodiment, an APD is used for a light receiving element, so the pixel 200 is also called a SPAD pixel 200. The light receiver 210 may include an APD (211) (see, e.g., FIG. 17). The APD 211 may be an avalanche photodiode. The pixel circuit 220 may include a recharge circuit (recharger) 221, a gating circuit 222, an in-pixel counter (counter ) 223, a read latch circuit (latch circuit) 224, a selection circuit (hereinafter also referred to as "SEL") 225, and an output bus 228, etc. The sensitivity determiner 230 may perform predetermined sensitivity determination on pixel data to select a sensitivity channel. The sensitivity determiner 230 may be appropriately omitted as needed. Detailed descriptions of configurations of the pixel circuit 220 and the sensitivity determiner 230 will be provided later.

[Unit exposure time]

The recharge circuit 221 may recharge a cathode of the APD 211 once per unit exposure time (or exposure time unit) by a recharge signal received from the controller 110. In other words, the unit exposure time may indicate a time period from when recharge is performed until next recharge is performed. The unit exposure time may be a fixed time period, and may not depend on an amount of incident light. One recharge period may be called one exposure time unit. That is, the entire exposure period may be a collection of a plurality of exposure time units. The recharge signal may be a one-shot trigger signal with a period corresponding to the unit exposure time (e.g., 4 $\mu$s). In the present embodiment, for example, an anode of the APD 211 may be set at a fixed potential and the cathode may be recharged, so that a potential difference between the anode and the cathode may become a predetermined voltage at which the APD 211 can operate in a Geiger mode. Specifically, a potential difference that is a sum of a built-in avalanche breakdown voltage of device fixation and an externally controllable excess voltage may be applied between the anode and the cathode. The APD 211, operating in the Geiger mode, may also be called a SPAD 211. Then, the present disclosure is not limited to a configuration in which the anode is at a fixed potential, but conversely, it may have a configuration in which the cathode is at a fixed potential and the anode is recharged.

The gating circuit 222 may generate a pulse signal based on an output signal of the APD 211 at a timing of a plurality of different CHK signals within a unit exposure time. A generation timing of the pulse signal and a specific hardware configuration of the gating circuit 222 will be described later.

The in-pixel counter 223 may detect and count photons incident on a pixel 200 and contributing to occurrence of an avalanche operation by counting pulse signals from the gating circuit 222, and not all photons incident on the pixel 200 may necessarily contribute to the count. A specific hardware configuration of the in-pixel counter 223 will be described later (see, e.g., FIG. 17).

<Count of photons per unit exposure time>

[Subframe]

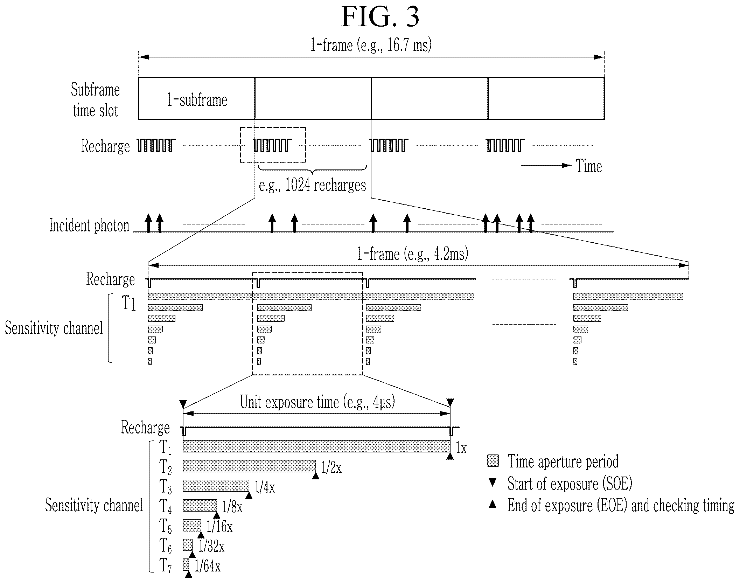

FIG. 3 illustrates a schematic view showing a time aperture imaging algorithm in the present embodiment. In the present embodiment, one frame may include multiple subframes. In an example shown in FIG. 3, one frame includes four subframes. If one frame (e.g., 16.7 ms) includes four subframes, one subframe corresponds to a period of 4.2 ms. Additionally, one subframe may include multiple exposure time units. FIG. 3 illustrates an example where 1024 exposure time units are included in one subframe. Accordingly, in this case, 1024 recharge operations are performed in one subframe.

[Sensitivity channel]

A number of photons reaching the APD 211 increases and decreases depending on a height (e.g., intensity) of the illumination, but an average arrival interval of photons to the APD 211 is known to follow an exponential distribution regardless of the height of the illumination. Photons may reach the APD 211 randomly, so a probability density that a photon reaches the APD 211 at any time within a recharge period may be expected to be unbiased. By utilizing this randomness characteristic, in the time aperture imaging algorithm, an exposure time may be determined by the time aperture, and multiple virtual sensitivity channels may be set within one pixel.

In the present embodiment, multiple virtual sensitivity channels (or referred to as "sensitivity channels") $T_i$ may be set for one exposure time unit (i=1, 2, $\cdots$). The multiple virtual sensitivity channels $T_i$ may be a plurality of periods for confirming photon detection. In FIG. 3, each sensitivity channel $T_i$ may start exposure by "start of exposure (SOE)" indicated by a black inverted triangle, and may end exposure by "end of exposure (EOE)" indicated by a black triangle. The end of exposure may also be a confirmation timing for photon detection. For example, the confirmation of photon detection may be performed at the end of each virtual sensitivity channel $T_i$. The controller 110 may activate the CHK signal (determination signal) at multiple different timings of the end of exposure of each sensitivity channel $T_i$. In an example, the gating circuit 222 may generate a pulse signal based on the output signal of the APD 211 at a timing corresponding to an end of a virtual sensitivity channel having highest sensitivity among the plurality of different timings.

If the recharge signal is low active, the exposure of each sensitivity channel $T_i$ may start when the recharge signal becomes LO (low), and may end when a time aperture period set for each sensitivity channel $T_i$ (i = 1, 2, ...) has elapsed from the start. Accordingly, timings of checking photon detection may be different. Meanwhile, exposure may start substantially simultaneously for all sensitivity channels $T_i$. That is, the sensitivity channels $T_i$ may start at substantially the same timing. Time aperture periods of the sensitivity channels $T_i$ may overlap each other in a period corresponding to a time aperture period of the sensitivity channel with a lowest sensitivity from the start of exposure ($T_7$ in FIG. 3).

In this way, in the present embodiment, the photoelectric conversion device 100 may include a plurality of virtual sensitivity channels $T_i$ having different time lengths within a unit exposure time. The sensitivity channels $T_i$ may start exposure at substantially the same start timing, and may end the exposure at different end timings, and photon detection checking may be performed. The sensitivity channels $T_i$ may be configured such that one virtual sensitivity channel includes another virtual sensitivity channel on a time axis.

In FIG. 3, an example is given where the sensitivity channels $T_1$ to $T_7$ are set. Hereinafter, although the following description will be provided as an example where the sensitivity channels $T_1$ to $T_7$ or $T_1$ to $T_3$ are set, but the present disclosure is not limited to these cases. The sensitivity channel $T_1$ may be a most sensitive channel (e.g., highest sensitivity channel) with a time aperture period of 1 time unit exposure time. The sensitivity channel $T_1$ may have a sensitivity to detect (count) photons over a time (e.g., period of time) substantially equal to the unit exposure time. $T_2$ may be a sensitivity channel with a time aperture period that is $1/2 \, (= 1/2^1)$ times the unit exposure time. That is, the sensitivity channel $T_2$ may have a sensitivity to detection of photons over a period of half the unit exposure time. $T_3$ may be a sensitivity channel with a time aperture period that is $1/4 \, (= 1/2^2)$ times the unit exposure time. That is, the sensitivity channel $T_3$ may have a sensitivity to detection of photons over a period of one-quarter of the unit exposure time. This may be true of $T_4$ to $T_7$.

A ratio of the time aperture period to the unit exposure time of sensitivity channels $T_1$ to $T_7$ (hereinafter referred to as "time aperture ratio (TAR)") is not limited to the ratios such as 1/2, 1/4, etc. described above. However, for convenience of hardware configuration, it may be desirable that the time aperture ratio be set to $1/2^k$ (k is a natural number). In addition, as will be described later, various time aperture ratios may be combined for sensitivity channels $T_1$ to $T_7$.

[Method of counting photons per unit exposure time]

As light intensity (hereinafter referred to as "incident illumination") incident on the APD 211 is higher, a number of photons incident on the APD 211 may increase. In addition, exposure start may be common to each of the sensitivity channel $T_1$ to $T_7$, and photons may arrive at the APD 211 randomly, so as incident illumination increases, a probability of photons being incident during one recharge period may increase. In particular, as the incident illumination is higher, a probability that photons will be incident on a sensitivity channel of low-sensitivity with a short aperture period (hereinafter referred to as a "low-sensitivity channel") may be higher.

Furthermore, time aperture periods of the sensitivity channel $T_i$ (i=1, 2, ...) may partially overlap each other, so when a photon is incident on a certain sensitivity channel $T_i$, the photon is also incident on another sensitivity channel $T_j$(j>i) that has a higher sensitivity than that of the sensitivity channel $T_i$. Accordingly, the time aperture period of each of the sensitivity channels $T_1$ to $T_7$ may be matched to a sensitivity level of each of the sensitivity channels $T_1$ to $T_7$, i.e., weight values of the sensitivity regardless of the time dependence of the timing of the photon incidence. For example, the time aperture period may be considered synonymous with the weight value for the sensitivity of the sensitivity channel.

In the time aperture imaging algorithm, a number of photons incident on the APD 211 may be calculated based on a total number of photon counts $CNT_i$ by the sensitivity channel $T_i$ per unit exposure time. A detailed description of the method for calculating the photon number will be given below.

The count value CNT may be initialized to 0 before counting starts. For each of the sensitivity channels $T_1$ to $T_7$, it may be determined whether a photon is incident during the time aperture period, and if the photon is incident, 1 may be added to the count value CNT. That is, for each of the sensitivity channels $T_1$ to $T_7$, it may be determined whether a photon is incident from start of exposure until end of exposure, and if so, 1 may be added to the count value CNT. On the other hand, if it is not incident, nothing may be added. For example, when a photon is incident on the sensitivity channel $T_7$, 1 may be added to the count value CNT for the sensitivity channel $T_7$. Furthermore, the start of exposure is common to each of the sensitivity channels $T_1$ to $T_7$, therefore 1 may be added to the count value CNT for each of the sensitivity channel $T_1$ to $T_6$. Therefore, the final count value CNT may become 7. Furthermore, if a photon is incident during a period when the sensitivity channel $T_1$ is set, the final count value CNT may become 1. If no photons enter the sensitivity channel $T_1$, the final count value CNT may become 0. In the present embodiment, counting of photons by the sensitivity channel $T_i$ may be realized, e.g., by the in-pixel counter 223 as described later.

[Amount of information related to number of photons per unit exposure time]

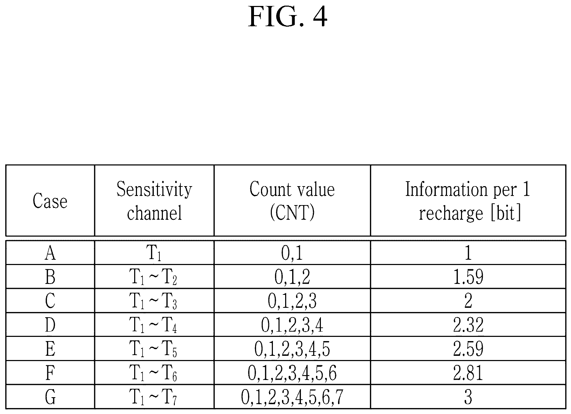

FIG. 4 illustrates an example amount of information related to a number of photons per recharge depending on a sensitivity channel used.

If an information amount I related to a photon number is defined as logarithm $\log_2(CNT + 1)$ with base 2, when using the sensitivity channels $T_1$ to $T_7$, the information amount I may become a maximum of 3 bits per recharge. As a number of sensitivity channels $T_i$ used increases, more information related to incident illumination may be obtained with a single recharge operation. In the definition formula for the information amount I, CNT may represent a final count value.

In this way, in the present embodiment, information related to an amount of incident light may be expressed using multiple bits (multi-bits) and acquired at once (referred to as "multi-bit information acquisition"). For example, the photoelectric conversion device 100 may obtain a lot of information related to an amount of incident light at once at each illumination height by utilizing statistical characteristics of photons.

[Concept model of visualization using time aperture]

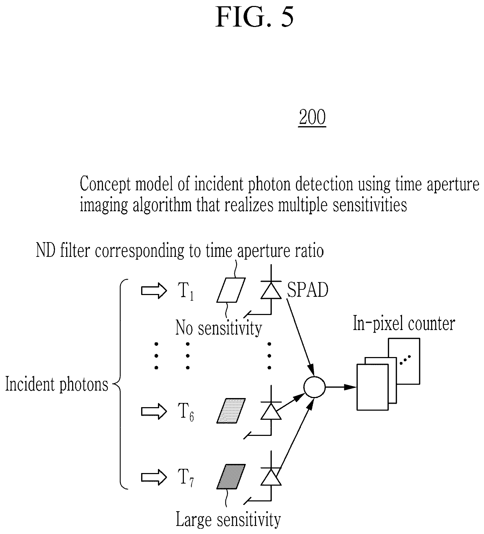

FIG. 5 illustrates a schematic diagram showing an example concept model of incident photon detection using a time aperture imaging algorithm that realizes multiple sensitivities. Acquisition of multi-bit information may be modeled by the concept model shown in FIG. 5. In the concept model shown in this drawing, for one pixel, there may be multiple SPAD elements, and a neutral density (ND) filter corresponding to a temporal aperture ratio may be positioned in front of each of the SPAD elements. Each ND filter may have different sensitivity characteristics depending on a time aperture ratio. Multi-bit information acquisition may be considered to be equivalent to an operation of counting all outputs from multiple SPAD elements for incident light attenuated by an ND filter (or calculating a sum of the outputs). In a conventional CIS (CMOS image sensor), there may be a structure that accumulates photoelectrically converted electrons once, regardless of an amount of light, within a pixel, it may be impossible to perform modeling with multiple sensitivity characteristics.

[Dynamic range for illumination]

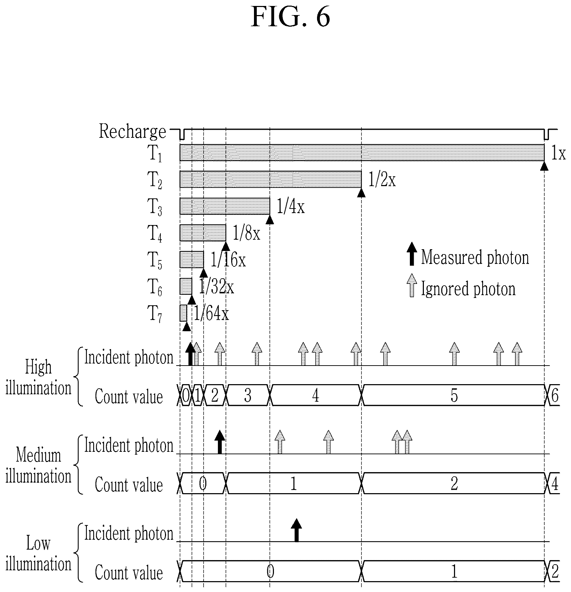

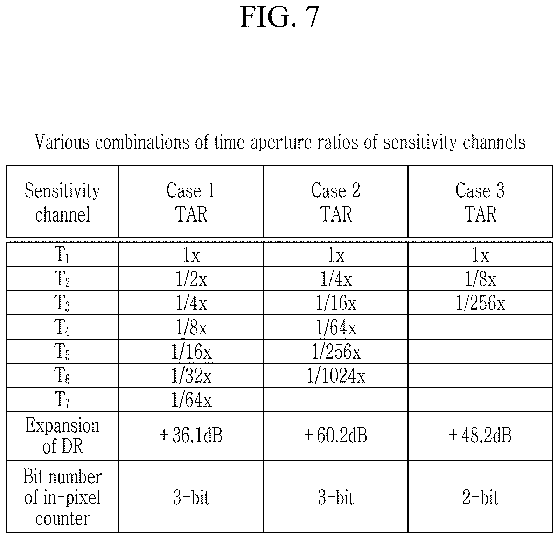

FIG. 6 illustrates example count values according to an illumination height. FIG. 7 illustrates an example dynamic range expansion and an example number of intra-pixel counter bits corresponding to various combinations of time aperture ratios for sensitivity channels.

In this specification, a range of illumination over which the photoelectric conversion device 100 may detect (count) photons is called a dynamic range (DR) for illumination (hereinafter also simply referred to as "dynamic range"). Hereinafter, for better understanding and ease of description, an example may be given where the incident illumination is divided into three levels: high illumination, medium illumination, and low illumination. There may be several types of incident illumination.

The high illumination may refer to very high illumination, such as sunlight. In a case of the high illumination, a large number of photons may arrive within a given period of time. Furthermore, the medium illumination may represent illumination that is realized with, e.g., general indoor lighting. The low illumination may refer to illumination in dark lighting environments, such as under moonlight at night. In a case of the low illumination, it may be not uncommon for no photons to be received during a single recharge period.

As shown in FIG. 6, the number of photons incident during one recharge period may increase as the illumination increases. Accordingly, even during a short aperture period set to the low-sensitivity channel, a probability of photons being incident may increase, so a final count value CNT may increase. For example, a time aperture ratio of the lowest sensitivity channel $T_7$ and the highest sensitivity channel $T_1$ may be 64 times. That is, for high intensity light, the count value increase of the sensitivity channel $T_7$ is suppressed by 64 times more than that of the sensitivity channel $T_1$.. Therefore, it may be possible to count without saturating the count value with a small number of bits of an in-pixel counter. An illumination range over which each sensitivity channel operates linearly may be controlled by the time aperture ratio, and as a result, a dynamic range in pixels 200 may be easily expanded.

For each of the high, medium, and low illumination, the APD 211 may measure (detect) a first incident photon (or a first photon) during the recharge period. The APD 211 may not measure photons incident after the second time because a potential difference between the anode and the cathode decreases upon measurement of the first photon. As such, photons after the first photon may be ignored. In an example of high illumination shown in FIG. 6, the first photon incident during the time aperture period of the sensitivity channel $T_6$ after the time aperture period of the sensitivity channel $T_7$ is measured, and the photons incident after the second time are ignored, but the count value may become 6 from the sensitivity channel $T_6$ to $T_1$ by the time aperture imaging algorithm of the present embodiment. Furthermore, in an example of medium illumination, the first photon incident during the time aperture period of sensitivity channel $T_4$ after the time aperture period of sensitivity channel $T_5$ is measured, and the photons incident after the second time are ignored, but they may be counted from the sensitivity channel $T_4$ to $T_1$, and the count value may become 4. In an example of low illumination, the first photon incident during the time aperture period of the sensitivity channel $T_2$ after the time aperture period of the sensitivity channel $T_3$ is measured, and the photons incident after the second time are ignored, but they may be counted in the sensitivity channel $T_2$ to $T_1$, and the count value may become 2.

Meanwhile, the number of sensitivity channels to be set may be 1 or plural. To achieve an effect of expanding the dynamic range, it may be desirable to set multiple sensitivity channels $T_i$. However, the time aperture period of each of the sensitivity channels $T_i$ may be set to include the time aperture period of the lower sensitivity channel. By the constraints on the settings of these sensitivity channels, even for randomly arriving photons, the time dependence may be canceled, and thus an input-output transfer function described below may be realized while maintaining the sensitivity ratio of each sensitivity channel $T_i$.

As shown in FIG. 7, the dynamic range may be arbitrarily expanded, and a dynamic range expansion ratio $DR_{EXT}$ may be according to the following equation (1) by setting a time aperture ratio TAR for each sensitivity channel $T_i$, which is a ratio of a time aperture period of each sensitivity channel $T_i$ to the time aperture period of the sensitivity channel $T_1$,

[Formula 1]

$$DR_{EXT} = 20 \log\left(\frac{1}{TAR}\right) [dB] \qquad (1)$$

This figure illustrates expansion of the dynamic range DR calculated for Cases 1 to 3. Furthermore, for each case, a number of bits of the in-pixel counter required to realize the photon count in hardware is exemplified. In this way, a characteristic that allows easy control of dynamic range expansion is referred to as "DR expansion controllability" in this specification.

In addition, as will be described below, depending on the number of sensitivity channels and the time aperture ratio, it may be possible to suppress the occurrence of a decrease (Dip) in a signal-to-noise ratio (SNR), or to design a trade-off between SNR and DR expansion rate (referred to as "ease of trade-off design"). Furthermore, by preparing a mode according to an imaging scene in consideration of a trade-off design, optimization may be performed, including power consumption of an entire imaging system and signal processing within the imaging system.

As described above, an average photon arrival time interval may follow an exponential distribution, so generally, in SPAD pixels with clock-synchronous recharge, if the average photon arrival time interval approaches the recharge period interval, a probability of multiple photons being incident during one recharge period may increase. Accordingly, due to this deviation in the arrival time interval, the count value may exhibit nonlinearity in the vicinity of saturation, but for simplicity of description, the count value may be assumed to have linear characteristics.

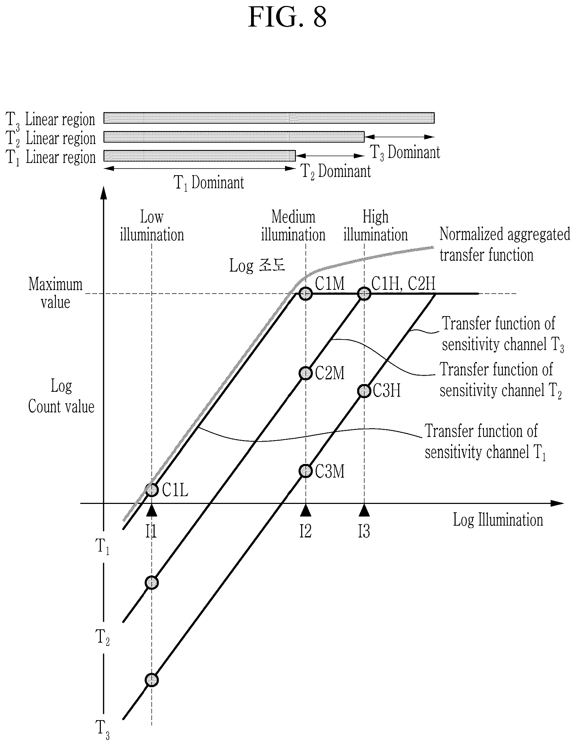

FIG. 8 illustrates an example graph showing a sensitivity channel transfer function and a normalized aggregated transfer function each by summing pixel count values of a unit exposure time of one frame period. The aggregated transfer function may be aggregated addition of each sensitivity channel transfer function. In FIG. 8, a horizontal axis is a log of the illumination, and a vertical axis is a log of the count value.

The sensitivity channel $T_1$ may handle counting operations from low illumination $I_1$ to medium illumination $I_2$. A period during which incident illumination is changed from the low illumination $I_1$ to the medium illumination $I_2$ may be a region where the sensitivity channel $T_1$ is linear, and the sensitivity channel $T_1$ may become dominant over the other sensitivity channels. In addition, the sensitivity channel $T_2$ may handle counting operations until the incident illumination is changed from the medium illumination $I_2$ to high illumination $I_3$. During a period during which the incident illumination is changed from the medium illumination $I_2$ to the high illumination $I_3$, the sensitivity channel $T_2$ may be linear, and the sensitivity channel $T_2$ may become dominant over the other sensitivity channels. In addition, the sensitivity channel $T_3$ may handle counting operations to a predetermined illumination level even after the incident illumination is changed to the high illumination $I_3$. During a period during which the incident illumination is changed from the high illumination $I_3$ to the predetermined illumination level, the sensitivity channel $T_3$ may be linear, and the sensitivity channel $T_3$ may become dominant over the other sensitivity channels.

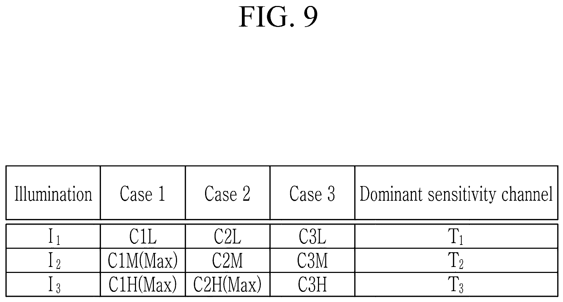

FIG. 9 illustrates an example count value according to illumination and an example dominant sensitivity channel for each illumination. For example, in a case of the low illumination $I_1$, count values of the sensitivity channels $T_1$, $T_2$, and $T_3$ may respectively be C1L, C2L, and C3L. In the case of the low illumination $I_1$, a dominant sensitivity channel may be the sensitivity channel $T_1$. For example, in a case of the medium illumination $I_2$, the count values of the sensitivity channels $T_1$, $T_2$, and $T_3$ may respectively be Max (maximum value), C2M, and C3M. In the case of the medium illumination $I_2$, a dominant sensitivity channel may be the sensitivity channel $T_2$. For example, in a case of the high illumination $I_3$, the count values of the sensitivity channels $T_1$, $T_2$, and $T_3$ may respectively be Max, Max, and C3H. In the case of the high illumination $I_3$, a dominant sensitivity channel may be the sensitivity channel $T_3$.

When the illumination increases beyond the medium illumination $I_2$, the sensitivity channel $T_1$ may become saturated to be nonlinear, and may be unable to handle the counting operation, but the sensitivity channel T2 may have linearity in that area and may be more sensitive than the sensitivity channel $T_3$, so the sensitivity channel T2 may play a central role in increasing an accumulated count value accumulating the counts. When the illumination increases beyond the high illumination $I_3$, the sensitivity channels $T_1$ and $T_2$ may become saturated after nonlinear response and may be unable to handle the counting operation, but the sensitivity channel $T_3$ may have linearity up to a certain illumination and may also have a certain sensitivity, so the sensitivity channel $T_3$ may play a central role in increasing the accumulated count value.

The sensitivity channel $T_1$, $T_2$, and $T_3$ may have a constant sensitivity to illumination, so a synthesis count value obtained by normalizing the accumulated count value may show a monotonic increase with illumination. Furthermore, a number of incident photons may be accurately obtained, with effects of the number of sensitivity channels or the time aperture ratio corrected, i.e., the sensitivity increase corrected, by normalizing the accumulated count value by a normalization factor NF. The NF may be expressed by a following Formula 2.

[Formula 2]

$$NF = \frac{1}{\sum_{i=1}^{NC} TAR(T_i)} \qquad (2)$$

In the Formula 2, $T_i$ indicates the sensitivity channel, TAR indicates the time aperture ratio, and NC indicates a total number of sensitivity channels.

Furthermore, whether a photon detected during the recharge period contributes to the count value may be determined by quantum behavior, which does not include readout noise, due to a very high photoelectric conversion gain of the SPAD 211. Furthermore, the aggregated transfer function obtained by synthesizing each sensitivity channel may be substantially uniquely determined, so it may be possible to substantially accurately calculate the number of incident photons as a linear count value proportional to the incident illumination, i.e., substantially completely linearized by processing of the pre-processor 131, which will be described below. However, the calculated value may also include optical shot noise inherent in the original photon.

In this way, in the present embodiment, multiple sensitivity channels $T_i$ with changed time aperture periods within the exposure time unit may be used. Photons may have an averagely non-deviating appearance probability during the recharge period, so arbitrary sensitivity may be achieved by changing the time aperture during a very short recharge period. For example, by making the aperture very short, it may be possible to realize a channel with very low sensitivity, and even for subjects with very high illumination, it may be possible to obtain images that are not saturated. Accordingly, during one frame period, even for a high-illumination subject that originally required a count of 1 million, it may now be expressed with a count of about 10,000 to 20,000.

[Input/output transfer function]

Assuming that photons incident on the APD 211 are averagely scattered during the charge period depending on the incident illumination Ix, a count value (detection value) CNT(Ti(Ix)) for each sensitivity channel $T_i$ of the incident photons may be calculated. However, herein, the illumination Ix may be proportional to the number of incident photons, so in a following formula, the illumination Ix may represent the number of photons. Furthermore, the expected value E [CNT(Ix)] of the count value in one recharge may be calculated by the following Formula 3 by accumulating the count value CNT(Ti(Ix)) by the number of sensitivity channels NC.
[Formula 3]

$$E[CNT(lx)] = \sum_{i=1}^{NC} CNT\big(T_i(lx)\big) \qquad (3)$$

The above expected value may include both the nonlinearity caused by the clock-synchronous recharge operation and the sensitivity characteristic due to the time aperture method. The accumulated count value for any incident illumination Ix, i.e., the transfer function, may be calculated. In addition, a normalized aggregated transfer function may be calculated by multiplying the calculated transfer function by the normalization factor NF (Formula 4 below).
[Formula 4]

$$TF_{agg,norm}(lx) = NF \cdot \sum_{j=1}^{NR} \left( \sum_{i=1}^{NC} CNT_j\big(T_i(lx)\big) \right) \qquad (4)$$

Furthermore, the expected value E[Cm(Ix)] of the count in a clock-synchronous recharge method may be calculated by a following Formula 5 from calculation of the expected value in a case where no photons are incident during the recharge period and in a case where one or more photons are incident in the Poisson distribution. However, $T_{ETU}$ indicates a time of 1 exposure time unit.
[Formula 5]

$$E[C_M(lx)] = \big(1 - e^{-lx \cdot T_{ETU}}\big) / T_{ETU} \qquad (5)$$

[SNR, dynamic range (DR) expansion ratio]

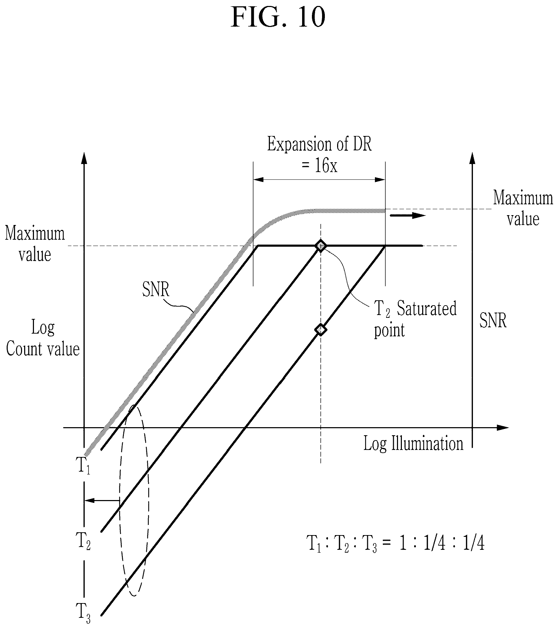

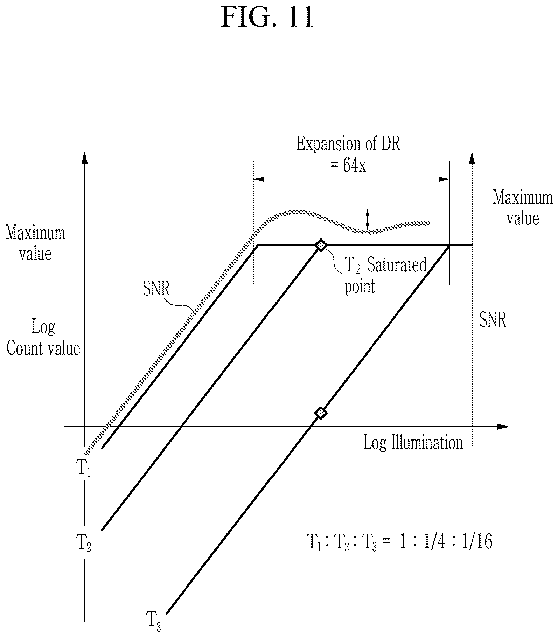

FIG. 10 illustrates a graph showing an example of SNR and DR magnification, and FIG. 11 illustrates a graph showing another example where SNR Dip occurs in SNR and DR magnification.
For example, it is assumed that three sensitivity channels $T_1$, $T_2$, and $T_3$ are used. When the time aperture ratio of the sensitivity channels $T_1$, $T_2$, and $T_3$ is set to $T_1$:$T_2$:$T_3$=1:1/4:1/4, SNR may increase monotonically, but the obtained DR magnification may be 16 times. Meanwhile, as shown in FIG. 11, in a case where the time aperture ratio of the sensitivity channels $T_1$, $T_2$, and $T_3$ is set to $T_1$:$T_2$:$T_3$=1:1/4:1/16, when the sensitivity channel $T_2$ is saturated, the sensitivity channel $T_3$ may have a low count value. Accordingly, the SNR may be lower than when the illumination range (DR magnification) is small. That is, a decrease in the SNR (SNR Dip) may occur. However, even if it drops due to SNR Dip, it is known that when it exceeds a certain level, it cannot be detected by naked eyes of a person, and by utilizing this characteristic, it may be possible to achieve a high DR magnification, in this case 64x, while maintaining a sufficiently high SNR.
Furthermore, if the SNR is already sufficiently high and the image quality is not affected by the occurrence of dips, by making the time aperture ratio relatively large, a wider dynamic range may be achieved using a smaller number of sensitivity channels. For example, by reducing the number of sensitivity channels, a number of bits of a counter may be reduced or power consumption may be reduced. In this way, the present embodiment is characterized by ability to easily perform performance trade-off design with respect to SNR and DR magnification.

[Conversion of time aperture imaging parameters]

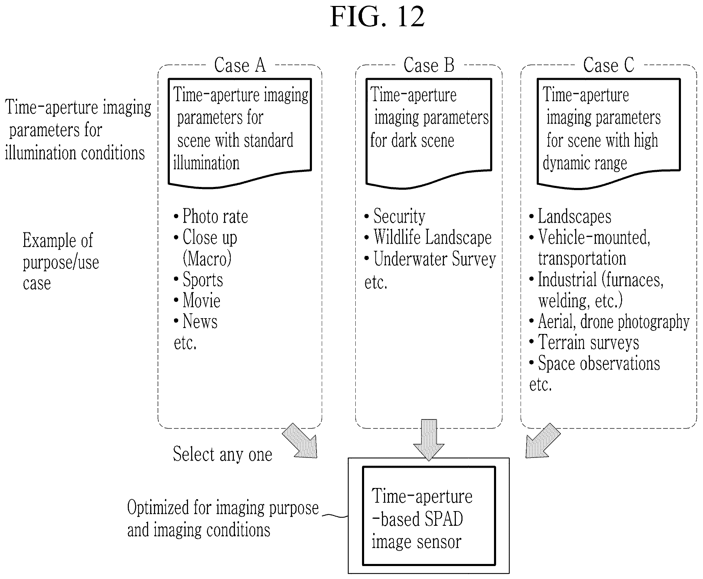

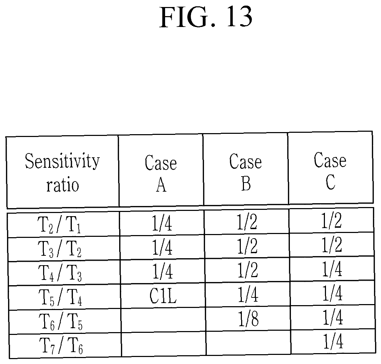

FIG. 12 illustrates a schematic view for describing conversion of time aperture imaging parameters according to an imaging illumination condition. FIG. 13 illustrates an example of setting a sensitivity ratio between each sensitivity channel.

As shown in FIG. 12, a time aperture imaging parameter may be configured to be converted depending on an imaging illumination condition. The imaging illumination condition may include a condition related to the illumination in an imaging location, and for example, it may include a scene with standard illumination, a dark scene, a scene with a large difference in brightness and darkness (high dynamic range), etc. The time aperture imaging parameter may include a parameter used in imaging of a time aperture mode, and in the present embodiment, for example, it may include a sensitivity ratio between each sensitivity channel. A user may prepare a set of time aperture imaging parameters depending on each imaging illumination condition and a subject or a use case assumed accordingly, For example, the user may input a set of time aperture imaging parameters into the photoelectric conversion device 100 at a time of imaging, or may select pre-registered time aperture imaging parameters. Accordingly, the photoelectric conversion device 100 may acquire (capture) an image under an optimal operating condition. Alternatively, the photoelectric conversion device 100 may be configured to determine an illumination range from the currently acquired image, and may automatically convert the time aperture imaging parameters.

As shown in FIG. 13, for example, Case A is considered to be imaging under a standard illumination environment, so sensitivity ratios of the four sensitivity channels $T_1$ to $T_4$ may be set to be equally sensitive to 1/4 times(i.e., all are 1/4 times). Accordingly, a dynamic range expansion ratio of $4 \times 4 \times 4 = 64$ times may be obtained.

Furthermore, Case B is imaging under moonlight at night, so it is considered that sufficient illumination is not obtained, and thus more sensitivity channels may be allocated to the high sensitivity side. Accordingly, this improves the image quality in low illuminance. Furthermore, it may also be set to use a sensitivity channel $T_6$. Accordingly, objects or persons walking at night may be recorded brightly and without being saturated with white.

Furthermore, in the case of Case C, a high dynamic range scene with both high and low illumination is present in a same scene, so all seven sensitivity channels $T_1$ to $T_7$ may be used, and in order to improve image quality on a low illumination side, a sensitivity ratio of $T_2$ and $T_3$ may be reduced. Accordingly, the dynamic range may be expanded to a high illumination side while maintaining low-illumination image quality, so for example, details of passengers in a car may be captured at substantially a same time as a subject illuminated by a high-brightness light of the car.

[Configuration of data accumulator 140]

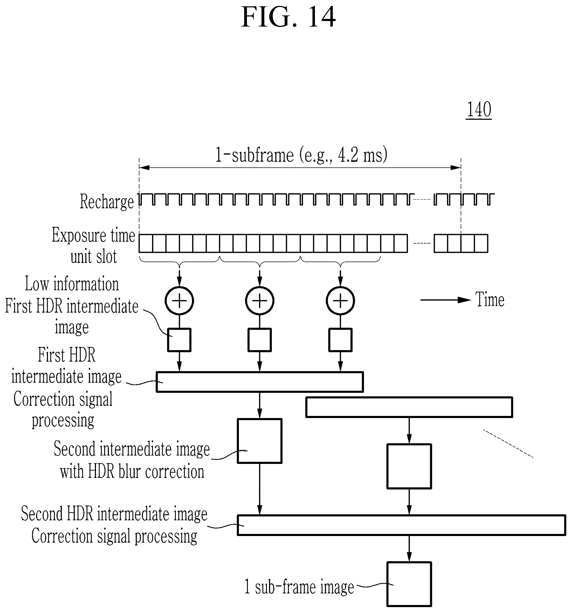

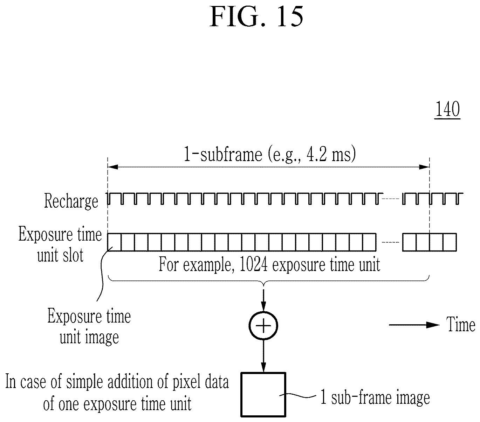

FIG. 14 illustrates a schematic view showing an example case where an image is reconstructed by performing correction processing on pixel data. In addition, FIG. 15 illustrates a schematic view showing an example case where an image is reconstructed by simply adding pixel data.

In imaging by a SPAD, unlike imaging by a CIS, no readout noise or quantization noise may occur due to an advantage of a very high photoelectric conversion gain. For example, in the imaging by the SPAD, the readout noise and quantization noise may be zero, and an image may be obtained during accumulation in the imaging. Accordingly, in the imaging by the SPAD, even if images during accumulation are accumulated and visualized, there may be no deterioration of SNR due to noise, and rather, the image quality may be improved as accumulation proceeds because the shot noise ratio to the signal decreases. In this way, the imaging by the SPAD may have excellent characteristics in terms of SNR and image quality.

As shown in FIG. 14, the data accumulator (calculation processor) 140 may first generate a first intermediate image by simply adding count values of the counter within several exposure time units in the exposure time units as a first process. The data accumulator 140 may then perform motion correction processing on several of the first intermediate images to generate a synthesized second intermediate image. The data accumulator 140 may then perform blur correction processing on the second intermediate image. Then, the data accumulator 140 may perform accumulation and motion correction processing again on the second intermediate image on which the blur correction processing has been performed, as a second process, thereby generating a final sub-frame image. Meanwhile, the second processing may not need to be performed. Furthermore, the motion correction processing, the blur correction processing, and denoise processing may be combined. When an amount of motion is small, motion blur correction may also be performed on a sub-frame basis.

In the present embodiment, information from high illumination to low illumination is already obtained at a time point of one exposure time unit frame by the time aperture imaging algorithm, so the motion correction processing may be performed for the entire illumination range. Accordingly, a clear motion picture may be obtained over the entire illumination range.

Furthermore, in the time aperture imaging algorithm, the information from the high to low illumination acquired in one short recharge period may be accumulated at a high frame rate and outputted as an image during the process. Accordingly, although an amount of image information during accumulation of one scene is small, for example, in a series of scenes, it may be possible to accumulate images during accumulation while aligning a position of a subject over a wide range from low to high illumination. Furthermore, by combining the accumulation of intermediately accumulated images with the first and second processes, it may be possible to suppress motion displacement caused by movement of the subject or movement of a camera itself, and to generate a high dynamic range of motion pictures with a good SNR, particularly for a low-illumination subject. Therefore, image quality of a high dynamic range of motion pictures may be improved.

As shown in FIG. 15, for example, by acquiring a 3-bit frame image within 1 exposure time unit and simply adding the acquired frame images, it may be possible to acquire an image without causing motion blur even when the motion of the subject is fast in a condition other than the low illumination. However, there are cases where sufficient contrast is not obtained, particularly when the subject moves quickly in a low-illumination environment.

[Configuration of signal processor 130]

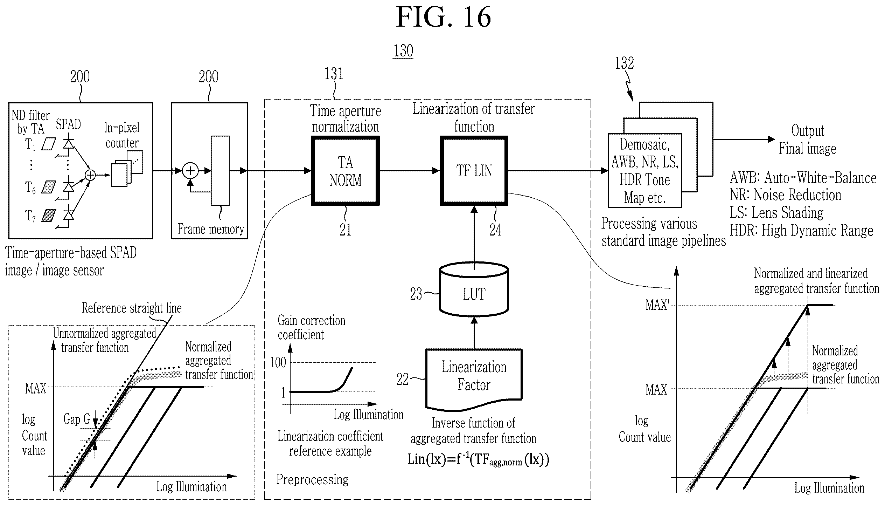

FIG. 16 illustrates a block diagram showing an example schematic configuration of the signal processor 130 shown in FIG. 1. The signal processor 130 may include a pre-processor 131 and an image processor 132.

The pre-processor 131 may perform normalization and linearization processing on an image (time aperture generated image) generated by a time aperture imaging algorithm (referred to as "pre-processing correction processing flow"). The pre-processor 131 may include a time aperture (TA) normalizer device (normalization processor) 21 (TA NORM), an inverse function calculator 22, a look up table (LUT) 23, and a transfer function linearizer (linearization processor) 24 (TF LIN).

The time aperture normalizer 21 may perform normalization processing on an image (raw data of count values) generated by a time aperture imaging algorithm, thereby calculating a normalized count value (exact number of photons). More specifically, as shown in a graph at a lower left end of FIG. 16, an aggregated transfer function before normalization is in a state where sensitivity is multiplied by a plurality of sensitivity channels (gap G between arrows), so by normalizing, original sensitivity may be restored and an exact number of photons may be calculated. In an example, the normalization processor 21 may calculate a value obtained by adding the count value of the counter over the plurality of unit exposure times and normalizing the added value, as a number of photons that contributed to occurrence of an avalanche operation in a predetermined frame.

The inverse function calculator 22 may calculate an aggregated transfer function $TF_{agg,\ norm}(lx)$. As described above, the aggregated transfer function $TF_{agg,\ norm}(lx)$ may have a characteristic obtained by synthesizing several characteristics: sensitivity associated with the time aperture imaging algorithm, an exponentially distributed photon arrival interval, and nonlinearity associated with a clock-synchronous recharge method. The inverse function $Lin(lx)$ of the aggregated transfer function may include a gain correction coefficient (or a linearization factor) that returns a nonlinear region of the calculated photon number to a linear type, and may be expressed by Formula 6 below.

[Formula 6]

$$Lin(lx) = f^{-1}\left(TF_{agg,norm}(lx)\right) = \frac{TF_{LIN}(lx)}{TF_{agg,norm}(lx)} \tag{6}$$

Herein, $TF_{LIN}(lx)$ is a linear function of a certain reference illumination $lx$, including photon detection efficiency such as quantum efficiency or avalanche occurrence probability. The aggregated transfer function $TF_{agg,\ norm}(lx)$ may be expressed as a complex formula, so it may be difficult to obtain a number of incident photons analytically. Accordingly, in the inverse function calculator 22, an input-output relationship may be obtained in advance from the aggregated transfer function $TF_{agg,\ norm}(lx)$ and $TF_{LIN}$, and calculation of the number of incident photons may be realized by writing a relationship between output and input as the inverse function $Lin(lx)$ in the LUT 23 based on the input/output relationship.

The transfer function linearizer 24 may perform linearization processing for the nonlinear range of the generated (e.g., by the time aperture normalizer 21) photon number (e.g., corresponding to the high-illumination range). More specifically, the transfer function linearizer 24 may perform a process of replacing the number of photons (count value) calculated by the time aperture normalizer 21 with corresponding illumination by referring to the LUT 23, thereby linearizing a corresponding relationship between the illuminance and the count value. The transfer function linearizer 24 may be used, for example, in the case of a color image where it is necessary to linearize a high-illumination region. Linearization by the transfer function linearizer 24 may not need to be used for black and white images. In FIG. 16, "MAX' " may refer to a maximum value of the normalized and linearized aggregated transfer function.

The image processor 132 may perform various processes such as demosaicing, auto white balance (AWB), a high dynamic range of tone map, and color processing through a general image signal processing pipeline. By performing a precorrection processing flow by the pre-processor 131, it may be possible to apply conventional general color reproduction or image processing even to images captured by the time aperture imaging algorithm.

<Example of hardware configuration of pixel 200>

[Example of two-layer structure]

FIG. 17 illustrates a circuit diagram showing an example case where hardware of the pixel 200 is configured as a two-layer substrate. For example, the pixel 200 may include a light receiver 210 including an APD 211 mounted on a first layer (first substrate) and a pixel circuit 220 mounted on a second layer (second substrate). By means of hybrid bonding stacking technology, an output signal of the APD 211 on the first layer is transmitted to the pixel circuit 220 on the second layer.

The second-layer pixel circuit 220 may include a recharge circuit 221, a gating circuit 222, an in-pixel counter 223, a read latch circuit 224, a selection circuit (SEL) 225, and an output bus 228.

The recharge circuit 221 may recharge a cathode of the APD 211 once per unit exposure time based on a recharge signal (Recharge).

The gating circuit 222 may control a count-up operation of the in-pixel counter 223 by controlling a clock input of the in-pixel counter 223. More specifically, the gating circuit 222 may include a NOR element, and the NOR element may input a cathode node potential Vc and a CHK signal and may output an OUT signal.

The in-pixel counter 223 may be configured as a ripple counter with a 3-bit counter, and may be initialized to 0 by an RSTB signal. The in-pixel counter 223 may perform count-up (increment) by a rising edge of the OUT signal, and detects an output (photon) of the APD 211. In the in-pixel counter 223, any number of bits may be used, as long as it can count values greater than or equal to the number of sensitivity channels $T_i$. In general, a size of the SPAD pixel 200 is limited by a size of the in-pixel counter 223, so the smaller the size, the better. FIG. 17 shows a configuration in 3 bits as an example.

The read latch circuit 224 may maintain each bit output of the in-pixel counter 223 by the recharge signal. The SEL 225 may control reading of a bit value maintained in the read latch circuit 224 through the output bus 228 according to a SEL signal. Meanwhile, a width (bit count) of the output bus 228 may preferably match a number of bits of the in-pixel counter, but they may be different. A smaller output bus width may make it easier to miniaturize the entire pixel, because a layout area required for wiring can be reduced. Furthermore, a most significant bit (MSB) of the in-pixel counter 223 may be maintained in the read latch circuit 224.

In the present embodiment, the read latch circuit 224 may be installed to perform reading of the count value of the in-pixel counter 223 in a manner that temporally overlaps the time aperture imaging. Reading of all pixels may be completed during one recharge period. In this case, since the unit exposure time and the reading time may overlap, a dead period for imaging due to reading may not occur, so imaging may be performed without causing sensitivity loss. Meanwhile, instead of installing the read latch circuit 224, by installing a surplus bit of +1 bit or more in the in-pixel counter 223, it may also be possible to perform low-speed reading during a period of one recharge period or longer.

[Example of operation of two-layer pixel circuit]

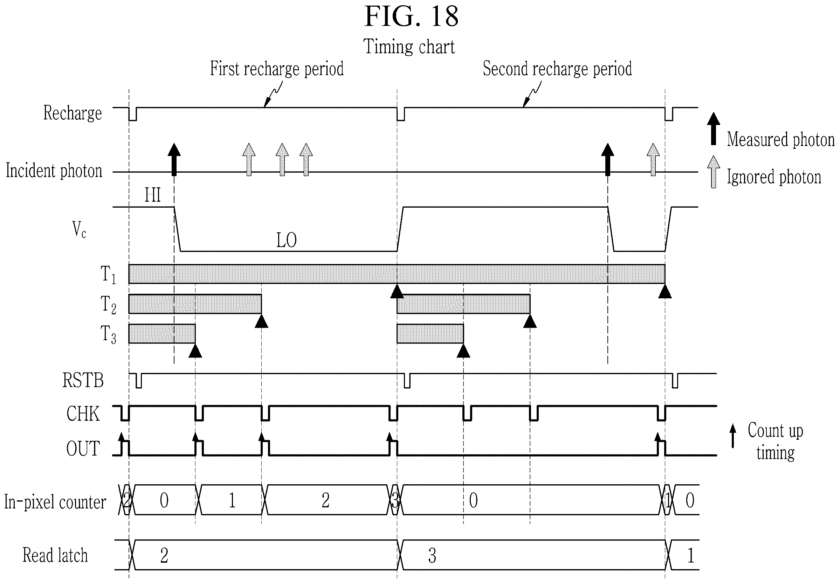

FIG. 18 illustrates a timing chart for describing an operation of the pixel circuit 220 shown in FIG. 17. However, to simplify description of the counter operation, values different from the actual circuit operation are used. Specifically, it may be described that a value of the in-pixel counter 223 is decremented when a clock comes in, but even if it is treated as incremented, no inconsistency in the operation itself occurs.

(1) When the recharge signal is in a LO level (or LO), a cathode node potential Vc of the APD 211 may be pulled up to a HI level (or HI). Accordingly, the APD 211 may operate in a Geiger mode and may be ready to receive photons.

(2) When a photon is incident on the APD 211, avalanche breakdown may occur and the cathode node potential Vc drops to the LO level.

(3) When the RSTB signal of the in-pixel counter 223 becomes LO, the in-pixel counter 223 is cleared to 0. Accordingly, preparation for the count operation may be performed.

(4) When the CHK signal becomes LO, the logic state of the cathode node potential Vc is output as the OUT signal and checked. If the cathode node potential Vc is HI, the OUT signal becomes LO by NOR logic. If the cathode node potential Vc is LO, the OUT signal becomes HI by the NOR logic. When the OUT signal becomes HI, a rising edge may be generated, so a value of the in-pixel counter 223 may be incremented accordingly.

In this way, the gating circuit 222 may transmit a logic state of the cathode node potential Vc to the OUT signal according to a logic state of the CHK signal. Accordingly, a state of the cathode node potential Vc of the APD 211 (output of the APD 211) may be checked at a timing selected from among multiple different termination timings of the sensitivity channel $T_i$.

(5) The cathode node potential Vc increases the count value each time the CHK signal becomes LO in order to maintain the state once the avalanche breakdown occurs. Accordingly, time aperture imaging may be performed. In an example of FIG. 18, three sensitivity channels Ti are set, and during a first recharge period, a first photon enters the sensitivity channel $T_3$. Accordingly, the count may be performed three times with each CHK signal of the sensitivity channels $T_3$, $T_2$, and $T_1$. Furthermore, the first photon enters the sensitivity channel $T_1$ during a second recharge period. Accordingly, the count may be performed once with the CHK signal of the sensitivity channel $T_1$. In an example, the gating circuit 222 may generate a pulse signal based on the output signal of the APD 211 at the at least one timing selected from among the multiple different termination timings.

(6) When the recharge signal becomes LO, the output value of the in-pixel counter 223 may be written to the read latch circuit 224 (LO-through-HI-Latch). For example, the read latch circuit 224 may pass (may not maintain) the output value of the in-pixel counter 223 when the recharge signal is LO, and may latch (may maintain) it when the recharge signal is HI. A value written to the read latch circuit 224 may be read over one recharge period. In the example of FIG. 18, at a timing when the recharge signal of the second recharge period changes from LO to HI, the count value "3" during the first recharge period may be written to the read latch circuit 224, and may read out during the second recharge period. Meanwhile, subsequent incident photons within a single recharge period may be ignored and not counted.

[Low power consumption of photoelectric conversion device 100]

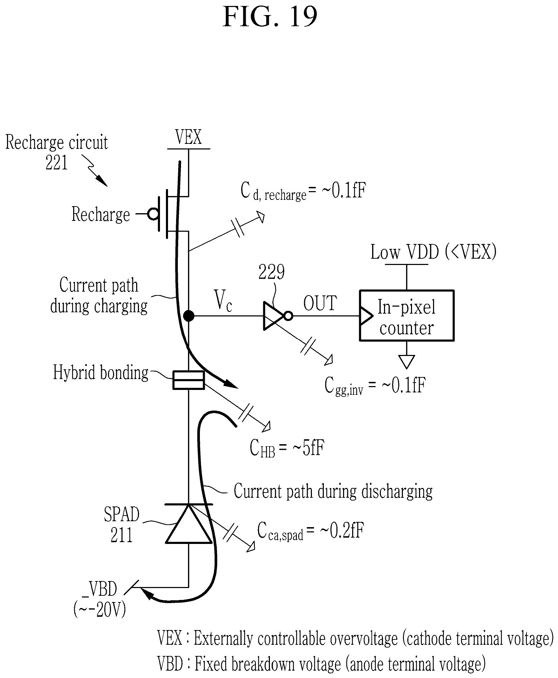

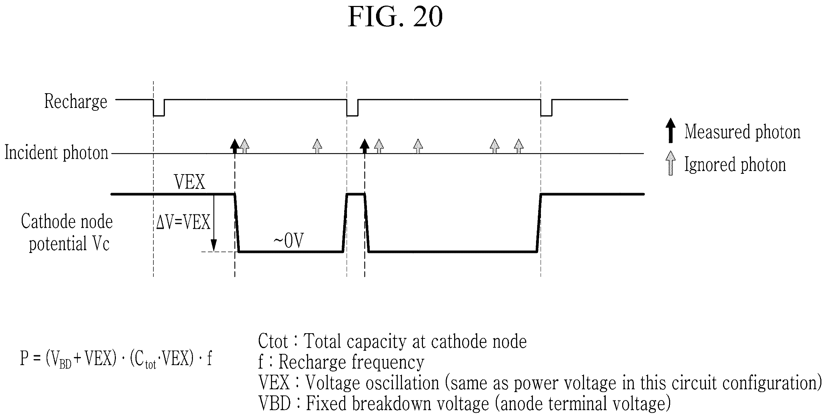

FIG. 19 illustrates a circuit diagram showing an example equivalent circuit for calculating power consumption at a cathode node of the SPAD 211. FIG. 20 illustrates a timing chart showing example charge and discharge operations in the equivalent circuit shown in FIG. 19.

In FIG. 19, power consumption P due to charging and discharging at a cathode node may be expressed by following Formula 7. In Formula 7, $V_{BD}$ indicates a breakdown voltage, $C_{tot}$ indicates total capacitance at the cathode node, VEX is a voltage excursion amplitude (in this configuration, it is equal to a power voltage), and f indicates a recharge frequency.

[Formula 7]

$$P = (V_{BD} + VEX) \cdot (C_{tot} \cdot VEX) \cdot f \qquad (7)$$

In general, in order to miniaturize the pixel size, the SPAD 211 and a recharge transistor of the recharge circuit 221 or an inverter circuit 229 may be manufactured as separate wafers and bonded using hybrid bonding technology, which is one of the stacking technologies. The inverter circuit 229 may be used to shape a cathode potential into a waveform and to convert it into a digital voltage. In general, hybrid bonding may require large electrode sizes, which in turn increases parasitic capacitance. For example, the parasitic capacitance $C_{HB}$ may be believed to be on average about 5 fF/ea. The parasitic capacitance $C_{d,recharge}$ of the recharge circuit 221 and the parasitic capacitance $C_{gg,inv}$ of the inverter circuit 229 may be about 0.1 fF, and the parasitic capacitance $C_{ca,spad}$ of the SPAD 211 may be about 0.2 fF.

In addition, in order to operate the SPAD 211 in an avalanche mode with high quantum sensitivity, it may be necessary to supply a high voltage, such as 3 V, as an excess voltage VEX. However, charge/discharge power may be generated once in proportion to a voltage excursion amplitude of the cathode node, herein VEX, and may flow to an anode terminal, to which a large negative voltage, usually close to -20 V in the case of a silicon substrate, is applied, to be discharged. Accordingly, the charge/discharge power due to the recharge operation may be seen as being much more dominant than the power consumed in the subsequent in-pixel counter 223 that generally uses a low power voltage of 1 V or less. Accordingly, it may be said that most of the power consumed in the SPAD pixel 200 is power consumed by the charging and discharging operation of the parasitic capacitance associated with the cathode node.

In the present embodiment, multi-bit information may be obtained in one recharge operation by a time aperture imaging algorithm. Accordingly, compared to the conventional clock-synchronous recharge method shown in Non-Patent Document 1, it may be possible to realize a dynamic range and SNR equivalent to or greater than that with, fewer recharge cycles, such as, e.g., 1/2.5 times the recharge cycles (e.g., as little as 40%). As a result, a scene of a high dynamic range may be obtained with significantly reduced power consumption compared to a conventional clock-synchronous recharge method.

**EP 4 657 874 A1**

[Ease of multi-pixelization of SPAD pixel 200]

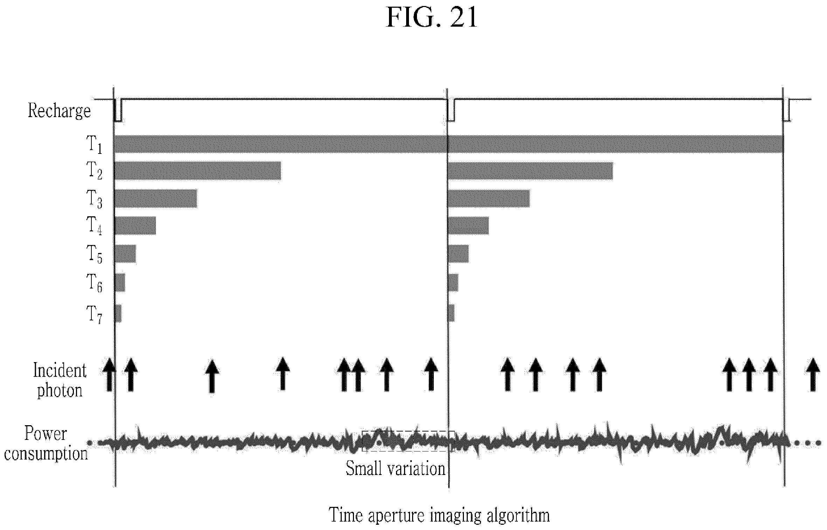

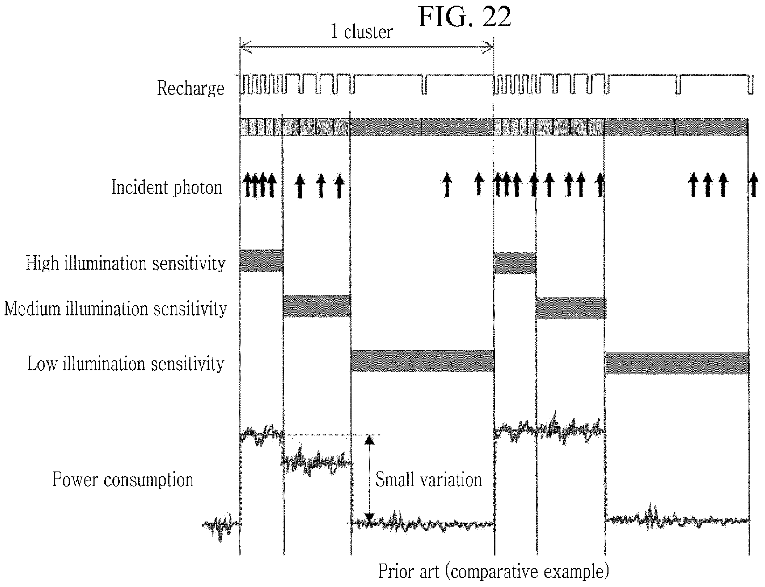

FIG. 21 illustrates a schematic view showing an example variation of power consumption in imaging by a time aperture imaging algorithm. FIG. 22 illustrates a schematic view showing an example variation of power consumption in imaging by a conventional clock synchronous recharge method as a comparative example.

As illustrated in FIG. 21, in the present embodiment, the SPAD pixel 200 may always perform a recharge operation at a constant interval regardless of an amount of incident light. Accordingly, even when incident light intensity is very strong or very weak, a variation in power consumption at the cathode node may be minimized. As a result, power fluctuations to the pixel array unit 120 may be suppressed. Furthermore, a peak current at the cathode node may also be suppressed. Accordingly, a power wiring design of the pixel array portion 120 may become easier, so multi-pixelation may be easily realized.

Meanwhile, as shown in FIG. 22, in imaging using the conventional clock-synchronous recharge method, the fluctuation in power consumption in SPAD pixels may be large. Accordingly, the power wiring design of the pixel array is difficult, so multi-pixelation may not be easily realized.

[Ease of pixel miniaturization of SPAD pixel 200]

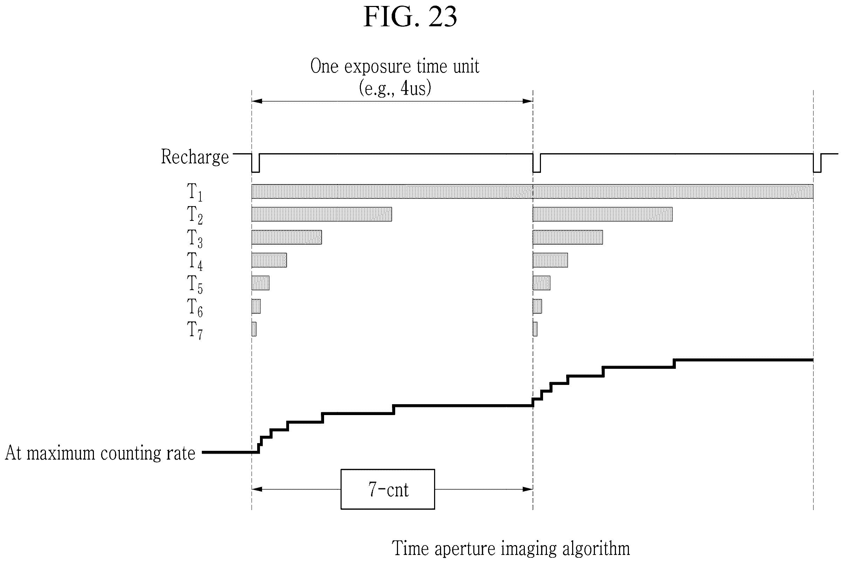

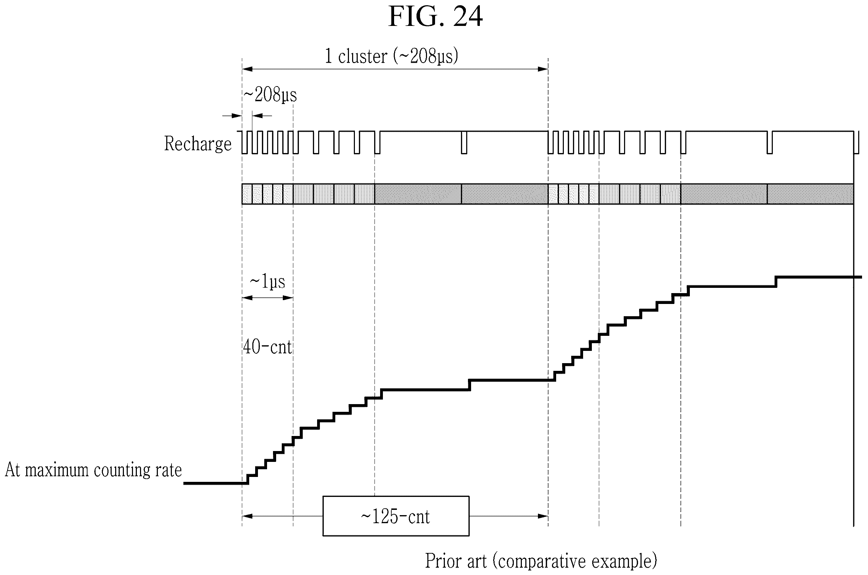

FIG. 23 illustrates a schematic view showing an example count number of counters within a pixel per exposure time unit in imaging using a time aperture imaging algorithm. FIG. 24 illustrates a schematic view showing an example count number of counters within a pixel per cluster in imaging by a conventional clock-synchronous recharge method as a comparative example.

In the time aperture imaging algorithm, recharge operation may be always possible at a constant interval regardless of the incident light amount, and for a very strong light amount, a low sensitivity channel with a low time aperture ratio may be responsible for detecting photons. For example, use of the sensitivity channel is equivalent to taking an image by being sensitive to light, so it may be possible to perform a counting operation by suppressing a count increase rate within one recharge period. By this characteristic, the in-pixel counter 223 may be configured by using a small number of bits, so pixel miniaturization may be possible.

As shown in FIG. 23, in the time aperture imaging algorithm of the present embodiment, when the sensitivity channel $T_1$ to $T_7$ are used, the count increases only by 7 during one exposure time unit, so a 3-bit intra-pixel counter may be sufficient. The size of the SPAD pixel 200 may be limited by the size required by the pixel counter 223, rather than the size of the SPAD 211, so pixel miniaturization may be easily realized by a time aperture imaging algorithm that can capture images with a small number of bits. Furthermore, if there are three sensitivity channels, it may be implemented with a 2-bit counter, making even smaller pixels possible.

Meanwhile, in the conventional clock synchronous recharge method, as shown in FIG. 24, the shortest recharge cycle is approximately 25 ns, and it is assumed that this is executed in bursts of approximately 40 times. Furthermore, in a 1-cluster period including multiple types of recharge cycles, the maximum may be estimated to be approximately 125 counts. Accordingly, in order to accurately count incident photons, the in-pixel counter may need to have a large number of bits, such as 8 bits.

Therefore, in the time aperture imaging algorithm method of the present embodiment, a pixel front-end circuit may be configured that suppresses the number of bits of the in-pixel counter compared to the conventional method.

[Feasibility of high frame rate]

In the time aperture imaging algorithm method, a dynamic range of expansion ratio may be determined solely by a time aperture ratio, unlike in the conventional method, binary low-bit images may be outputted at a high frame rate without relying on a degree of dynamic range expansion.

According to the photoelectric conversion device 100 of the present embodiment described above, it may be possible to suppress an increase and fluctuation in power consumption of a pixel, while suppressing an increase in a circuit size of the pixel 200. Furthermore, according to the photoelectric conversion device 100, a low bit image may be output at a high frame rate regardless of a degree to which a dynamic range for illumination is expanded.

(Second embodiment)

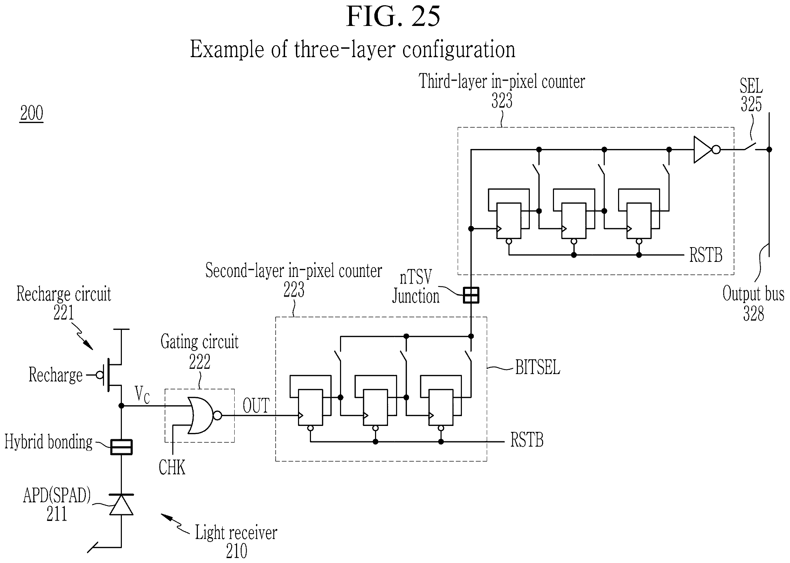

In the second embodiment, a case is exemplified where hardware of the pixel 200 is formed of a three-layer substrate. FIG. 25 illustrates a circuit diagram showing an example case in which pixel hardware is configured as three layers in a photoelectric conversion device according to a second embodiment. In order to avoid duplication of description, detailed descriptions of the same configurations as in the first embodiment will be omitted.

[Example of three-layer structure]

The configuration of the first and second layers may be the same as that of the two-layer configuration in the first embodiment, except for the read latch circuit 224, the SEL 225, and the output bus 228. As on the second layer, an in-pixel counter 323 (or a third-layer in-pixel counter) (upper counter) may be mounted on the third layer (third substrate). The in-pixel counter 223 (or a second-layer in-pixel counter) on the second layer and the in-pixel counter 323 on the third layer may be connected in series, and the in-pixel counter 223 and the in-pixel counter 323 may cooperate to operate as one large in-pixel counter. For connection between the second-layer in-pixel counter 223 and the third-layer in-pixel counter 323, a connection element such as Nano-Through silicon via TSV (nTSV) may be used.

Then, numbers of bits of the second-layer in-pixel counter 223 and the third-layer in-pixel counter 323 may not necessarily have to be the same. A sum of the number of bits of the in-pixel counter 223 and the in-pixel counter 323 may be at least $CEIL(\log_2(\text{number of sensitivity channels } T_i)) + 1$ bit or more. However, the CEIL represents a rounding up function.

In a three-layer configuration, a rate at which a final bit is changed is reduced. Accordingly, all pixels of the pixel array portion 120 may be transmitted over multiple recharge periods, so the read latch circuit 224 may become unnecessary. Instead of the read latch circuit 224, a selector may be installed to read all the bits last, and whether to read it or not may be controlled by the BITSEL signal.

[Example of operation of three-layer pixel circuit]

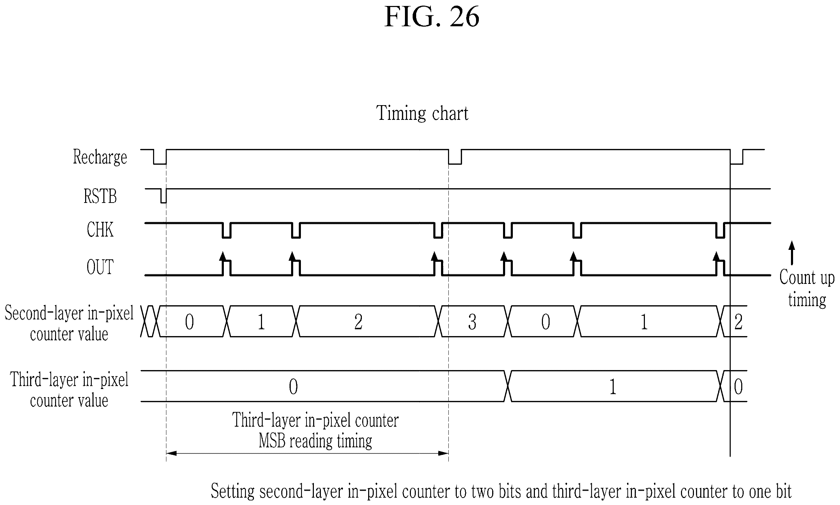

FIG. 26 illustrates a timing chart for describing an operation of the pixel circuit 220 shown in FIG. 25. However, for ease of description, FIG. 26 illustrates an example in which the second-layer in-pixel counter 223 of FIG. 25 is configured with 2 bits, the third-layer in-pixel counter 323 is configured with 1 bit, and the number of sensitivity channels is set to 3.

(1) When the in-pixel counter 223 on the second layer becomes a full code, the carry is transferred to the in-pixel counter 323 on the third layer, and a value of the in-pixel counter 323 on the third layer is incremented.

(2) Next, a shortest time for the second-layer in-pixel counter 223 to become a full code is after one recharge time. Accordingly, by reading an uppermost bit of the in-pixel counter 323 from pixel 200 until then, an increment event carried over from a lower bit may be counted exactly outside the pixel 200 without any omission.

(3) After all accumulation times have ended, lower bit information remaining in the in-pixel counter 223 is sequentially read using the BITSEL signal. Accordingly, even if not all bits are read per recharge time, a same count value may be finally obtained.

(Third embodiment)

In the third embodiment, a case is described where each pixel 200 of the pixel array portion 120 may include a light receiver 210 and a pixel circuit 220, and the photoelectric conversion device 100 may include a data accumulator 140 as a peripheral circuit of the pixel array portion 120. In order to avoid duplication of description, detailed descriptions of the same configuration as in the first embodiment will be omitted.

[Example of pixel circuit and data accumulator in two-layer configuration]

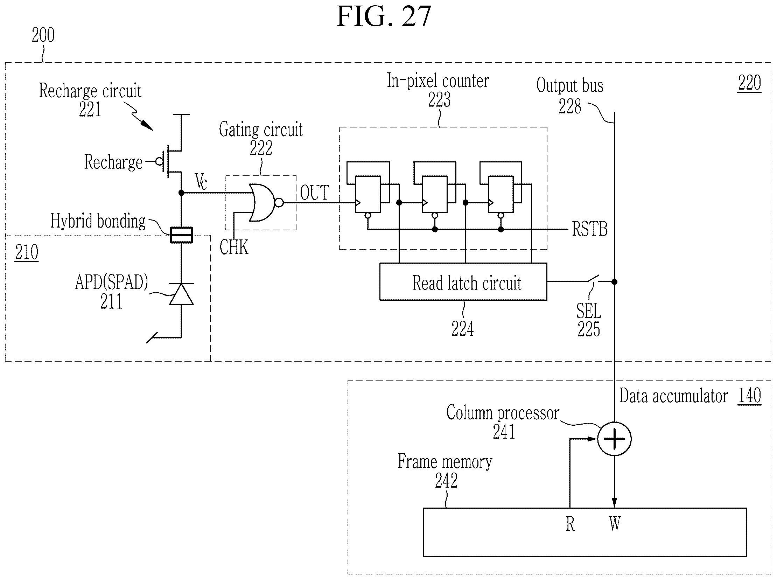

FIG. 27 illustrates a circuit diagram showing an example pixel 200 and an example data accumulator 140 in a two-layer configuration according to a third embodiment. In the present embodiment, the pixel array portion 120 may include a data accumulator 140 in addition to a plurality of pixels 200. The pixels 200 may each include a light receiver 210 and a pixel circuit 220. As for configurations of the light receiver 210 and the pixel circuit 220, they are the same as in the first embodiment, so detailed description will be omitted.

The data accumulator 140 may be provided outside the pixel array portion 120, and may include a column processor 241 and a frame memory 242. The column processor 241 may accumulate (e.g., add) pixel data (e.g., count values of the counters) read from the read latch circuit 224 or the in-pixel counter 223 over a plurality of unit exposure times, and may write the accumulated value (added value) into the frame memory 242. The column processor 241 may include, e.g., an adding circuit, and one may be installed per column. The frame memory 242 may be a memory that maintains the accumulated value by the column processor 241, and may be, e.g., a static random access memory (SRAM). For example, when simply accumulating pixel data, the column processor 241 may add data (R) read from an address corresponding to the frame memory 242 and pixel data output from the pixel circuit 220, and may write the added value (W) to the address corresponding to the frame memory 242. As such, by providing the frame memory 242 around the pixel array portion 120 and digitally accumulating it, a number of bits of an in-pixel counter may be reduced, and further, pixel miniaturization may be facilitated.

[Layer configuration of pixel 200]

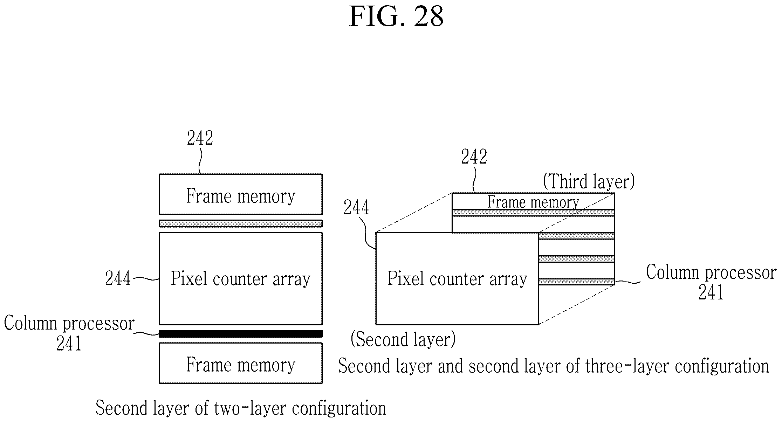

FIG. 28 illustrates a schematic block diagram showing an example layer configuration of the pixel 200. When a substrate has a two-layer configuration (left drawing), a pixel counter array 244 including a pixel circuit 220 and a sensitivity determiner 230 within a same layer, a column processor 241, and a frame memory 242 may be arranged on a second layer. In the pixel counter array 244, a plurality of pixel circuits 220 may be arranged in an array shape. The column processor 241 and the frame memory 242 may be divided into multiple pairs within a same layer. FIG. 28 illustrates an example where a pair of column processor 241 and frame memory 242 are arranged one by one with the pixel counter array 244 therebetween. In the example shown in FIG. 28, parts are arranged in a vertical direction of the drawing, but they may also be arranged in a horizontal direction. Furthermore, a number of pairs (divisions) of the column processor 241 and the frame memory 242 is not limited to two, and may be four or more.

Furthermore, when the substrate has a three-layer configuration (right drawing), the pixel counter array 244 may be positioned on the second layer, and a plurality of pairs of column processor 241 and frame memory 242 may be positioned directly below the pixel counter array 244 on a third layer. FIG. 28 illustrates an example where four pairs of column processor 241 and frame memory 242 are positioned. The number of pairs (divisions) of the column processor 241 and the frame memory 242 is not limited to four, and may be eight or more. Parasitic capacitance or resistance of a readout wire decreases according to a division number, so a high-speed readout operation may be realized.

(Fourth embodiment)

In the fourth embodiment, a case is described where imaging is performed using a sensitivity channel of a high-sensitivity as needed. In order to avoid duplication of description, detailed descriptions of the same configuration as in the first embodiment will be omitted.

[Modified example of gating circuit]

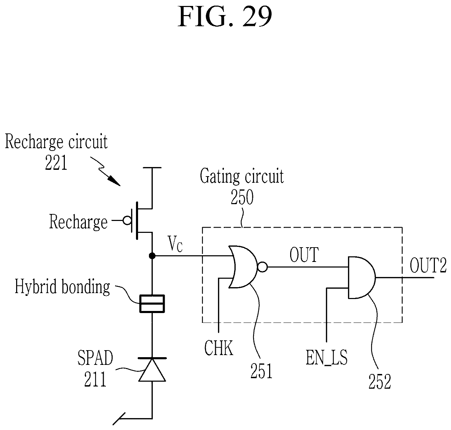

FIG. 29 illustrates a circuit diagram showing a modified example of a gating circuit according to a fourth embodiment. FIG. 29 illustrates an example case in which a two-stage gating circuit having one logic element in each stage is used. Gating may be performed using one gating signal at each stage of the gating circuit, i.e., a total of two gating signals at stage 2. In the present embodiment, the gating signal of the first stage is a CHK signal, and the gating signal of the second stage is an EN_LS (Low Sensitivity) signal. Accordingly, the in-pixel counter may be counted up using the sensitivity channel of the high-sensitivity (hereinafter referred to as the "high-sensitivity channel") $T_1$. This drawing illustrates an example in which a NOR element 251 is used in the first stage and an AND element 252 is used in the second stage, but other combinations of logic elements may be used as long as the same logical operation can be realized.

In the example shown in FIG. 29, a cathode node potential Vc is inputted to one input terminal of the NOR element 251, and a CHK signal is inputted to another input terminal. Furthermore, an output signal (OUT signal) of the NOR element is inputted to one input terminal of the AND element 252, and an EN_LS signal is inputted to another input terminal of the AND element 252.

The CHK signal may be enabled at an end timing of exposure of each sensitivity channel $T_i$. When the CHK signal is enabled, a logic state identical to the logic state of the cathode may be outputted as the OUT signal.

When the EN_LS signal is LO, the logic state of the OUT signal may not be output as OUT2 by the AND element 252. When the EN_LS signal is HI, the logic state of the OUT signal may be output as the OUT2 signal. The EN_LS signal may be a signal to control whether to check and count the low-sensitivity channels $T_2$ and $T_3$, and may be a control signal that does not count the low-sensitivity channels $T_2$ and $T_3$ when it is LO and counts the low-sensitivity channels $T_2$ and $T_3$ when it is HI.

It may be possible to control whether the high-sensitivity channel $T_1$ is checked, or whether the low-sensitivity channels $T_2$ and $T_3$ are also checked, depending on a logic level of the EN_LS signal. Accordingly, in scenes where high dynamic range images are unnecessary, a number of times of the value of the in-pixel counter 223 is incremented may be suppressed by omitting checking of the low-sensitivity channels $T_2$ and $T_3$. Accordingly, power consumption of the in-pixel counter 223 may be reduced.

Then, the EN_LS signal may not need to be common to all pixels 200 in the pixel array portion 120. For example, the pixel array portion 120 may be divided into a plurality of pixel areas, and different EN_LS signals may be respectively supplied to the divided pixel areas. In the present embodiment, it is assumed that a high-sensitivity channel is $T_1$, and all other sensitivity channels are low-sensitivity channels. In an example, a sensitivity channel whose time length is greater than a predetermined length may be a high-sensitivity channel, and a sensitivity channel whose time length is less than or equal to the predetermined length may be a low-sensitivity channel.

[Operations of recharge circuit 221 and gating circuit 250]

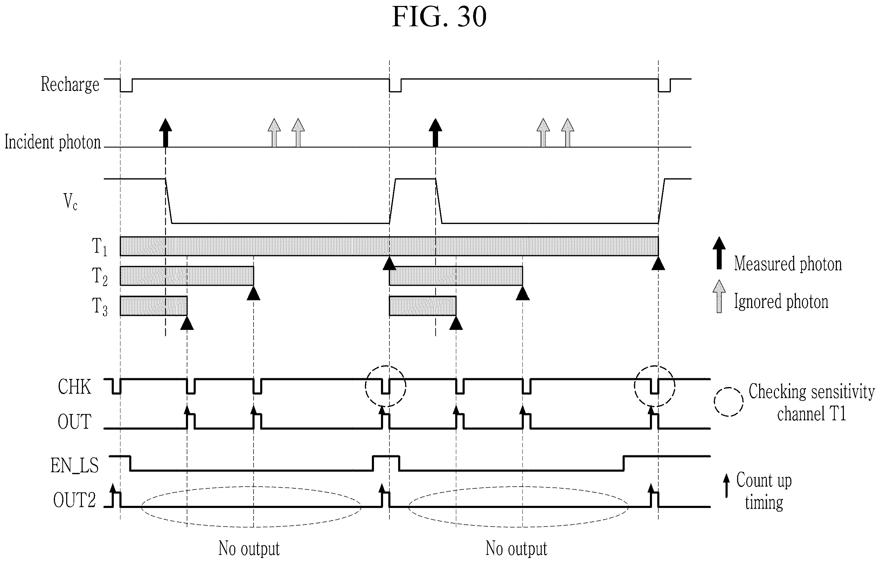

FIG. 30 illustrates a timing chart showing example operations of a recharge circuit 221 and a gating circuit 250 shown in FIG. 29.

(1) When the CHK signal becomes LO and the cathode node potential Vc is LO, a logic state of the OUT signal becomes HI.

(2) As shown in a circular frame portion of dotted lines in FIG. 30, by setting the EN_LS signal to HI when the sensitivity channel $T_1$ is checked, a logic state of the OUT2 signal and a logic state of the OUT signal may become the same, and this may be used as an event to increment the value of the in-pixel counter 223 at a subsequent stage.

(3) Meanwhile, at a timing of checking the sensitivity channels $T_2$ and $T_3$, the EN_LS signal is LO, and the logic state of the OUT signal is not output as the OUT2 signal, so the in-pixel counter 223 may not count up.

(Fifth embodiment)

In the fifth embodiment, a type of method for detecting photons using a low-sensitivity channel based on a low-illumination condition will be described. Furthermore, in order to avoid duplication of description, detailed descriptions of the same configuration as in the second embodiment will be omitted.

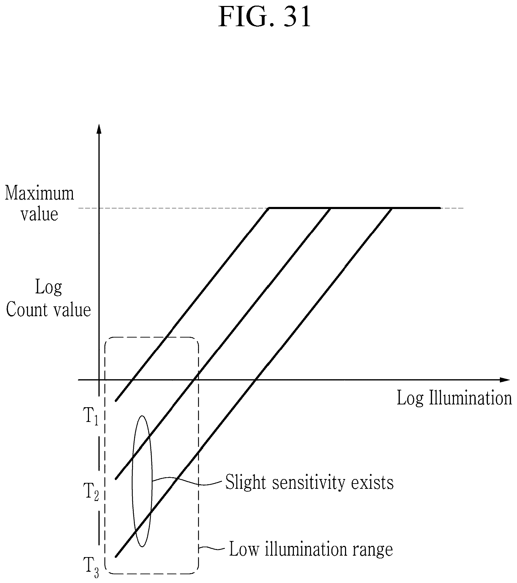

FIG. 31 illustrates a schematic view for describing detection of photons by a low-sensitivity channel in a low-illumination condition. FIG. 31 shows an example case where three channels $T_1$ to $T_3$ are set.

In photon detection, optical shot noise is involved, which cannot be removed in principle. A standard deviation of the optical shot noise may be calculated by a square root of the optical signal. For example, as the illumination increases, a signal-to-noise ratio (SNR) may increase, but a lot of optical shot noise may also occur. When comparing artifacts occurring in a time aperture imaging algorithm with optical shot noise, if the optical shot noise is sufficiently large, it may be considered indistinguishable from the artifacts occurring in the time aperture imaging algorithm. Therefore, when comparing the artifacts and the optical shot noise, if the optical shot noise is sufficiently large, the artifacts may be ignored.

Considering natures of these artifacts and optical shot noise, in the present embodiment, photons may be detected in a low-illumination condition, for example, using either of the following two methods.

Method 1 for improving low-illumination SNR: photons are counted by the high-sensitivity channel $T_1$ until the optical shot noise becomes sufficiently large, after which the count is also expanded to include the low-sensitivity channels $T_2$ and $T_3$.

Method 2 for improving low-illumination SNR: a count value acquired by the high-sensitivity channel $T_1$ and the count values acquired by the low-sensitivity channels $T_2$ and $T_3$ are accumulated in the frame memory 242 by completely independently accumulating them, and two transfer functions corresponding to the high-sensitivity and low-sensitivity channels are connected to each other. For example, two transfer functions are connected at a coordinate point of the incident illumination where the signal-to-noise ratio SNR is sufficiently higher than 30 dB (threshold). For example, the count value of the high-sensitivity channel $T_1$ is used in a case of illumination with a SNR that is equal to or lower than 30 dB, and the count values of the low-sensitivity channels $T_2$ and $T_3$ are used at illumination with a SNR that is higher than 30 dB.

In a very low-illumination range, a probability of photons being counted by the low-sensitivity channel is very low, but not zero, so in very rare cases, a pixel (bright spot) that is slightly brighter than its surroundings may occur. In this case, an absolute value of a luminance value of each pixel is small, so there is no major problem with image quality when viewing the image as a whole, but by using the above method, the image quality may be improved.

[Example of configuration of SPAD pixel 200 that enables low-sensitivity channel]

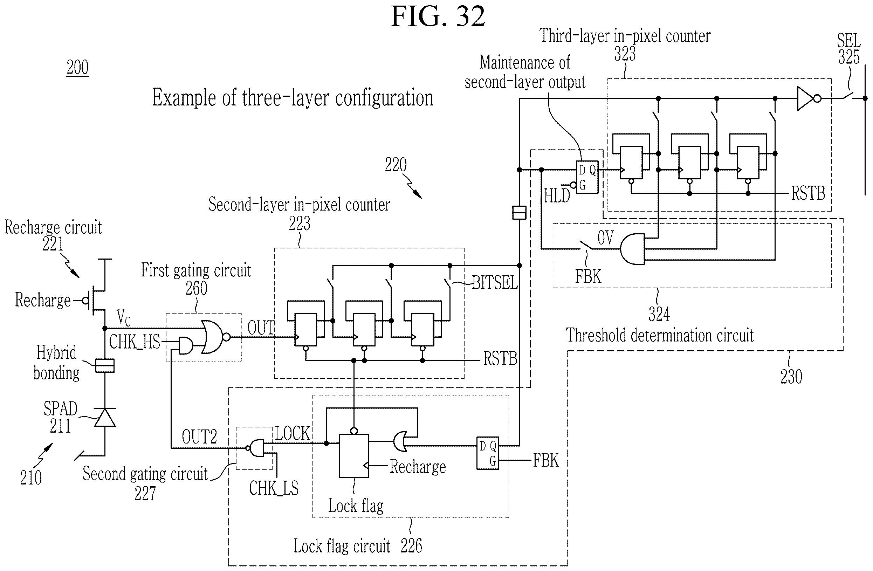

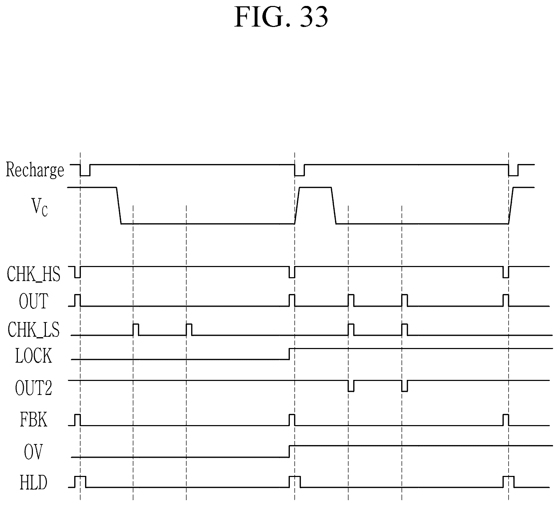

FIG. 32 illustrates a circuit diagram showing a specific means of the Method 1 for improving the low-illumination SNR, and showing an example SPAD pixel 200 that enables a low-sensitivity channel in a three-layer configuration. In the present embodiment, an example is given of a case where a high-sensitivity channel is enabled and exposure is initiated (a low-sensitivity channel is disabled), and after a certain period of time, if it is determined to be high illumination based on a determination condition described below, the low-sensitivity channel is enabled and photon counting is continued using both the high-sensitivity channel and the low-sensitivity channel. The period of time may be, e.g., a period of time until a count value of the in-pixel counter 323 in a third layer reaches a predetermined threshold. FIG. 32 illustrates an example case where the certain period of time is a period until all upper bits of the third-layer in-pixel counter 323 become HI. Furthermore, FIG. 33 illustrates a timing chart showing an example operation of the pixel circuit 220 of the SPAD pixel 200 shown in FIG. 32.

The pixel circuit on the second-layer may include a recharge circuit 221, a first gating circuit 260, an in-pixel counter 223, a lock flag circuit 226, and a second gating circuit 227. The first gating circuit 260 may include an AND element and a NOR element, may receive as input a cathode node potential Vc, a CHK_HS signal, and an OUT2 signal, and may output an OUT signal to the in-pixel counter 223. The CHK_HS signal may be a signal to check the high-sensitivity channel, and may be a LO active signal. The lock flag circuit 226 may generate a Lock signal (LOCK) that locks the low-sensitivity channel. The second gating circuit 227 may include a NAND element, may receive as input a Lock signal and a CHK_LS signal, and may output an OUT2 signal. The CHK_LS signal may be a signal to check the low-sensitivity channel, and may be a HI active signal.

Furthermore, the pixel circuit on the third-layer may include an in-pixel counter 323, a threshold determination circuit 324, and an SEL 325. The threshold determination circuit 324 may set an overflow (OV) signal to HI when a value of the in-pixel counter 323 reaches a predetermined threshold.

As shown in FIG. 33, in the threshold determination circuit 324, when all the upper bits of the third-layer in-pixel counter 323 become HI (a state of transition from low illumination to high illumination), the OV signal may become HI. By a FBK signal that becomes active at a same timing as the recharge signal, a logic state of the OV signal may be written to a lock flag DFF of the lock flag circuit 226 positioned on the second layer, and may be outputted as a lock signal. The Lock signal may indicate the low-sensitivity channel is locked, that is, the low-sensitivity channel is invalid when it is LO, and the low-sensitivity channel is unlocked, that is, the low-sensitivity channel is valid when it is HI.

When the lock is released, the gating operation of the second gating circuit 227 is enabled by the HI active signal of CHK_LS. The lock flag may be initially initialized to the LO level by the RSTB signal, and may be updated at each recharge cycle by the recharge signal. Thereafter, a gating operation of the first gating circuit 260 may be performed using all sensitivity channels from high sensitivity to low sensitivity.

When the count value of the in-pixel counter 323 reaches a predetermined threshold (all upper bits are HI in the example of FIG. 32), the OV signal may become HI. This signal may be transmitted from the third layer to the second layer by the FBK signal, and may be regularly accepted by the lock flag circuit 226. The lock flag, which is written to the HI level and released once, is always kept in an unlocked state by a return loop by the OR element.

The lock flag may be initially set to the locked state for the sensitivity channels $T_2$ and $T_3$, except for the sensitivity channel $T_1$, by the RSTB signal. Furthermore, the HLD signal may be used to receive and maintain the output of the second layer just before a latch circuit, to prevent malfunction due to discontinuity in an input state, when feeding back the OV signal from the third layer. Meanwhile, in the example shown in FIG. 33, a three-layer configuration is exemplified, but the same may be applied to a two-layer configuration or other layer configurations.

As such, the lock flag circuit 226 and the threshold determination circuit 324 may be positioned for each pixel 200, and may function as a sensitivity determiner 230 that determines (selects) the sensitivity channel $T_i$ used for photon detection for every pixel 200. The sensitivity determiner 230 may disable or enable a predetermined low-sensitivity channel. The sensitivity determiner 230 may continue to enable or disable the low-sensitivity channel for each pixel 200 according to a count state of the in-pixel counter 323. Furthermore, a configuration of the threshold determination circuit 324 is not limited to two values for whether or not to overflow, and as an application example, it may also be possible to use multiple values to enable multiple existing low-sensitivity channels in multiple stages.

[Modified example of first gating circuit]

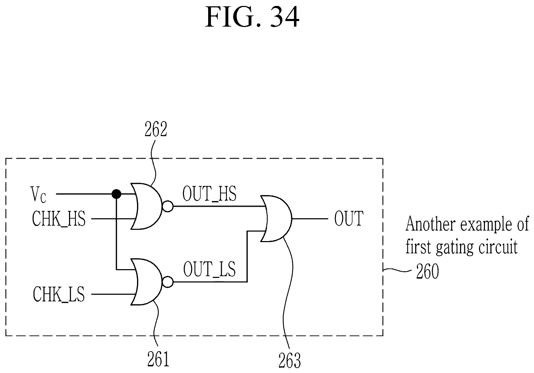

FIG. 34 is a circuit diagram showing a first gating circuit using a logic circuit different from that of the example of FIG. 32. In an example shown in FIG. 34, CHK_LS is a LO active signal, unlike in the example in FIG. 32. The first gating circuit 260 may include a first NOR element 261, a second NOR element 262, and an OR element 263. The first NOR element 261 may receive as input the cathode node potential Vc and the CHK_LS signal, and may output an OUT_LS signal. The second NOR element 262 may receive as input the cathode node potential Vc and the CHK_HS signal, and may output an OUT_HS signal. The OR element 263 may receive as input the OUT_LS and OUT_HS signals, and may output an OUT signal. According to a configuration of this modified example, a stage number of circuit configurations of CHK signals of high-sensitivity and low-sensitivity channels may be adjusted, and signal delay by the circuit configuration may be adjusted. Accordingly, it may be possible to generate a timing that realizes a time aperture ratio with high precision.

[Example of configuration of pixel circuit that adaptively determines use of low-sensitivity channel]

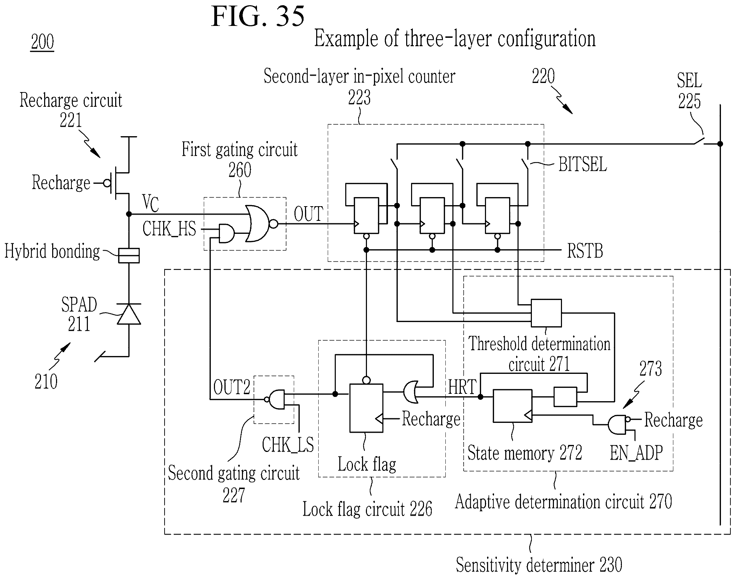

FIG. 35 illustrates a circuit diagram showing another specific means of the Method 1 for improving the low-illumination SNR, and showing an example SPAD pixel 200 having a function for determining whether to adaptively use a low-sensitivity channel in a two-layer configuration.

The pixel circuit on the second-layer may include a recharge circuit 221, a first gating circuit 260, an in-pixel counter 223, an adaptive determination circuit 270, a lock flag circuit 226, a second gating circuit 227, etc. Configurations of the recharge circuit 221, the first gating circuit 260, and the in-pixel counter 223 may be the same as described above, so a description thereof will be omitted.

The adaptive determination circuit 270 may be a circuit that adaptively determines whether to use a low-sensitivity channel based on a trend of an incident photon interval. The adaptive determination circuit 270 may include a threshold determination circuit 271, a state memory 272, and a circuit 273 associated with the state memory.

The threshold determination circuit 271 may determine whether a count value of the in-pixel counter 223 matches a predetermined threshold. The state memory 272 may be a memory for maintaining a state of a rate at which photons are incident on the pixel 200 after exposure is initiated (also simply referred to as the "incidence rate"), for example, a state of a counting rate of photons by the in-pixel counter 223. A number of bits in the state memory 272 may be appropriately set to a required number of bits.

The adaptive determination circuit 270 may determine the incidence rate of photons from start of exposure. More specifically, the adaptive determination circuit 270 may determine that light irradiation on the pixel 200 is high illumination when the incidence rate of photons is higher than a certain rate (high photon rate), and may immediately enable a low-sensitivity channel. In this case, optical shot noise becomes dominant, so artifacts due to a time aperture imaging algorithm may not be a problem, and good high-illumination images may be obtained.

Meanwhile, when the adaptive determination circuit 270 determines that the incident rate of photons is low (e.g., lower than or equal to a certain rate) (low photon rate), it may determine that the light irradiation on the pixel 200 is low illuminance, may not enable the low-sensitivity channel, and may enable a high-sensitivity channel. Accordingly, the artifacts resulting from the time aperture imaging algorithm may not occur, and good low-illumination images may be obtained.

Furthermore, adaptive determination by the adaptive determination circuit 270 may be performed at any time during an exposure period, but it may be most effective when performed in a short period immediately after the start of exposure. The adaptive determination circuit 270 may be enabled by the EN_APD signal.

As such, the adaptive determination circuit 270 may determine the incidence rate of photons, and may estimate an amount of incident light to the pixel 200 based on a determination result thereof. The adaptive determination circuit 270 may make determination based on the counting rate of incident photons, it may not be limited to a maximum value that can be expressed by the number of bits of the in-pixel counter 223. Furthermore, the required sensitivity channel may be selected for every pixel 200, so it may be possible to implement it even if the number of bits of the in-pixel counter 223 is small.

The lock flag circuit 226 and the adaptive determination circuit 270 may be positioned for each pixel 200, and may function as a sensitivity determiner 230 that determines (selects) the sensitivity channel $T_i$ used for photon detection for every pixel 200. The sensitivity determiner 230 may disable or enable a predetermined low-sensitivity channel. The sensitivity determiner 230 may calculate the incidence rate of photons from the count value of the in-pixel counter 223, and may continue to enable or disable the low-sensitivity channel based on a calculation result thereof.

<Example of determining amount of incident light based on incidence rate of photons>

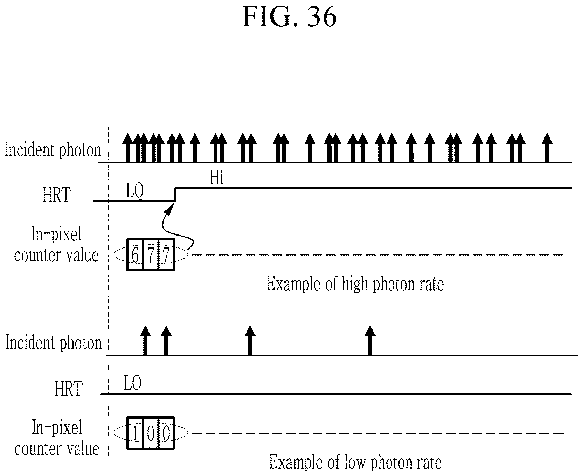

FIG. 36 illustrates a timing chart for describing a method of determining an amount of incident light based on an incidence rate of photons.

When high-illumination light is incident on the pixel 200 within the pixel array portion 120, an interval of an arrival time of photons incident on the pixel 200 may be short. For example, photons may be incident on the pixel 200 without interruption (almost continuously). In this case, it may be predicted that the final count value of the in-pixel counter 223 will increase. The adaptive determination circuit 270 may determine that the photon rate is high when photons are incident on the pixel without interruption. The adaptive determination circuit 270 may determine a high photon rate when a condition of the high photon rate is satisfied. A condition for a high photon rate may be, e.g., a state in which photons are incident on a pixel without interruption, such as when the count value of the in-pixel counter 223 is 4 or more three times in a row. FIG. 36 shows that values of the in-pixel counter in past three consecutive recharges are 6, 7, and 7. The adaptive determination circuit 270 may set the HRT signal to a HI level, and may enable the low-sensitivity channel when it determines a high photon rate. The HRT signal may be a signal that indicates a high photon rate.

Meanwhile, when low-illumination light is incident on the pixel 200, an interval between arrival times of photons may be long. For example, photons may be incident on the pixel 200 intermittently. In this case, a final count value of the in-pixel counter 223 may be expected to be very small. The adaptive determination circuit 270 may determine a low photon rate when the condition of the high photon rate is not satisfied. Furthermore, the adaptive determination circuit 270 may be configured to determine a low photon rate when photons are incident on the pixel 200 intermittently. The adaptive determination circuit 270 may determine the low photon rate in a state where photons are incident on the pixel 200 intermittently, for example, in a case where the count value of the in-pixel counter 223 is 0 or 1 during one recharge period. The adaptive determination circuit 270 may set the HRT signal to a LO level, and may disable the low-sensitivity channel when it determines the low photon rate. Furthermore, these examples are not limited to two stages of high photon rate and low photon rate, and as an application example, a multi-stage photon rate adaptive determination circuit may be installed, and multiple existing low-sensitivity channels may be enabled in multiple stages.

<Modified example of threshold determination circuit in SPAD pixel 200 that enables low-sensitivity channel>

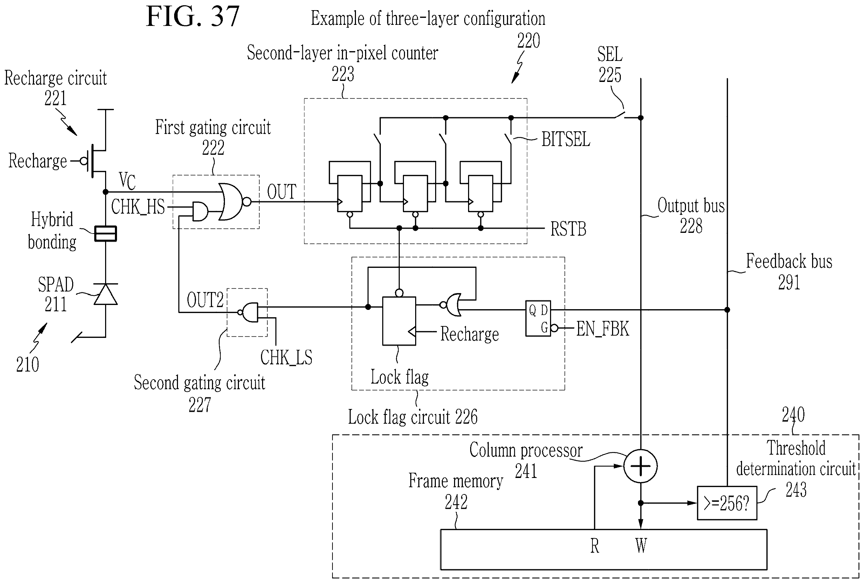

FIG. 37 illustrates a circuit diagram showing another specific means of the Method 1 for improving the low-illumination SNR, and showing a modified example of the threshold determination circuit in the SPAD pixel 200 that enables the low-sensitivity channel. A data accumulator 240 may include a column processor 241, a frame memory 242, and a threshold determination circuit 243.

In order to perform threshold determination using the count value of the in-pixel counter 223, a certain number of bits of the in-pixel counter 223 may be required, so there is a possibility that a pixel size of the SPAD pixel 200 will increase. As described above, pixel data outputted from the pixel circuit 220 of the SPAD pixel 200 may be accumulated in the frame memory 242 by the column processor 241 positioned immediately before the frame memory 242 outside the pixel array portion 120. FIG. 37 illustrates a threshold determination circuit 243 that determines whether an accumulation result by the column processor 241 is greater than or equal to a threshold, e.g., 256 counts. When the accumulation result by the column processor 241 is greater than or equal to the threshold, e.g., 256 counts, lock is released by clearing a lock flag of the lock flag circuit 226 via a feedback bus 291.

In this way, a threshold of any large value may be used for comparison with an accumulated value of pixel data by including a threshold value determination circuit 243 together with the column processor 241 outside of the pixel array portion 120.

The lock flag circuit 226 and the data accumulator 240 may function as a sensitivity determiner that determines (selects) the sensitivity channel $T_i$ used for photon detection for every pixel 200. The sensitivity determiner may continue to enable or disable a predetermined low-sensitivity channel. The sensitivity determiner may enable or disable the predetermined low-sensitivity channel based on the added value obtained by adding the count value of the in-pixel counter 223 over a plurality of unit exposure times.

<Separation of high-sensitivity count value and low-sensitivity count value from pixel data>

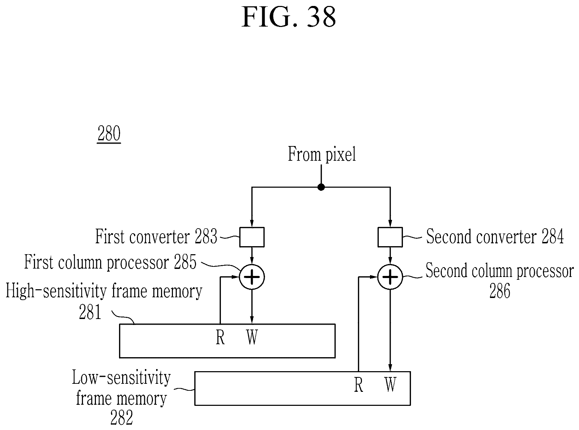

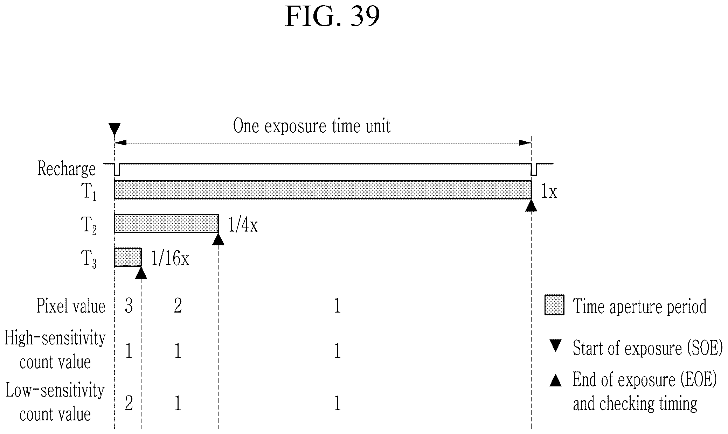

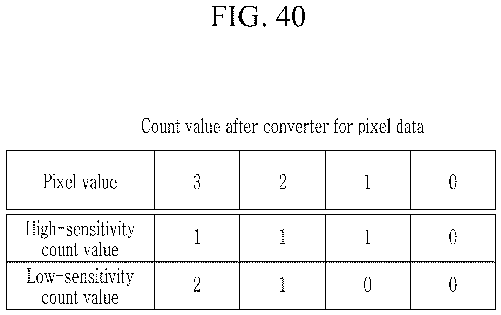

FIG. 38 illustrates a block diagram showing a specific means of the Method 2 for improving the low-illumination SNR, and showing an example configuration for separating high-sensitivity and low-sensitivity count values from pixel data. FIG. 39 illustrates a schematic view showing a method of separating high-sensitivity and low-sensitivity count values from pixel data. FIG. 40 illustrates a schematic view showing an example relationship between a pixel value, a high-sensitivity count value, and a low-sensitivity count value.

The count value acquired by the high-sensitivity channel $T_1$ may be referred to as a high-sensitivity count value, and the count values acquired by the low-sensitivity channels $T_2$ and $T_3$ may be to as low-sensitivity count values. As shown in FIG. 38, the photoelectric conversion device 100 may include a data accumulator 280, a frame memory 281 for high sensitivity (high-sensitivity frame memory) and a frame memory 282 for low sensitivity (low-sensitivity frame memory), first and second converters 283 and 284, and first and second column processors 285 and 286. The first and second converters 283 and 284 may correspond to the frame memory 281 for high sensitivity and the frame memory 282 for low sensitivity, respectively. In an example, the high-sensitivity frame memory 281 may be used to maintain the high-sensitivity count value, and the low-sensitivity frame memory 282 may be used to maintain the low-sensitivity count value.

As described above, the pixel circuit 220 may output data obtained by synthesizing a count value of photons detected through the high-sensitivity channel $T_1$ and a count value of photons detected through the low-sensitivity channels $T_2$ and $T_3$ by a time aperture imaging algorithm. For high sensitivity and low sensitivity, respectively, the converters may convert values (pixel values) of image data into high-sensitivity and low-sensitivity count values to output them. In an example, the first converter 283 may convert pixel data outputted by each pixel into a high-sensitivity count value, and the second converter 284 may convert the pixel data outputted by each pixel into a low-sensitivity count value. The first and second column processors 285 and 286 may respectively accumulate the outputs of the first and second converters 283 and 284, and may store them in the high-sensitivity and low-sensitivity frame memories 281 and 282, respectively. Therefore, pixel data compressed within a pixel is expanded by the converter.

For example, it is assumed that a count value of a 3-bit in-pixel counter 223 is outputted from the pixel circuit 220. As shown in FIG. 39, the high-sensitivity count value and the low-sensitivity count value may be calculated as follows.

[high-sensitivity count value]

The first converter 283 may output the high-sensitivity count value as 1 because the high-sensitivity channel $T_1$ is necessarily counted when the count value of the in-pixel counter 223 is $\geq 1$. The first column processor 285 may add the high-sensitivity count value to a value read from the high-sensitivity frame memory 281 to write it to the high-sensitivity frame memory 281. That is, the value of the high-sensitivity frame memory 281 may be incremented. Meanwhile, the first converter 283 may output the high-sensitivity count value as 0 when the count value of the in-pixel counter 223 = 0. The first column processor 285 may add the high-sensitivity count value to a value read from the high-sensitivity frame memory 281 to write it to the high-sensitivity frame memory 281 (i.e., no operation s performed on the high-sensitivity frame memory 281).

[Low-sensitivity count value]

When the count value of the in-pixel counter 223 is 1 or more, the second converter 284 may set "the count value of the in-pixel counter 223" - "1" (the value obtained by subtracting the high-sensitivity count value of the high sensitivity channel $T_1$), as the low sensitivity count value. The second column processor 286 may add the count value of the in-pixel counter 223 -1 to a value read from the low-sensitivity frame memory 282 to write it to the low-sensitivity frame memory 282. Meanwhile, the second converter 284 may output the low-sensitivity count value as 0 when the count value of the in-pixel counter 223 = 0. The second column processor 286 may add the low-sensitivity count value 0 to a value read from the low-sensitivity frame memory 282 to write it to the low-sensitivity frame memory 282 (i.e., no operation is performed on the low-sensitivity frame memory 282).

As such, it may become easy to realize a synthetic transfer function that is not affected by artifacts due to the time aperture imaging algorithm by separating the high-sensitivity count value and the low-sensitivity count value from the pixel data and connecting the transfer function obtained from each of them with an arbitrary threshold. Furthermore, another image signal processing such as linearization processing may be efficiently realized.

As described above, the photoelectric conversion device according to embodiments of the present disclosure has been described. However, those skilled in the art can appropriately add, modify, and omit aspects of the present disclosure within the scope of its technical idea.

For example, a configuration in which some of the configurations in another embodiment are added to the configuration in one embodiment among the first to fifth embodiments described above, or a configuration in which some of the configurations in one embodiment are deleted may be adopted.

In addition, in the first to fifth embodiments described above, some of the components arranged inside the pixel 200 may be arranged outside the pixel 200, or some of the components arranged outside the pixel 200 may be arranged inside the pixel 200.

## Claims

1. A photoelectric conversion device including an avalanche photodiode (211) including an anode and a cathode in each pixel of a pixel array (120), the photoelectric conversion device comprising:

   a recharger (221) configured to recharge the anode or the cathode once per unit exposure time;
   a gating circuit (222, 250, 260) configured to generate a pulse signal based on an output of the avalanche photodiode (211) at a plurality of different timings within the unit exposure time; and
   a counter (223) configured to count the pulse signal from the gating circuit (222, 250, 260).

2. The photoelectric conversion device of claim 1, wherein:
   the gating circuit (222, 250, 260) is further configured to receive an output signal of the avalanche photodiode (211) and determination signals (CHK) of the different timings to generate a pulse signal.

3. The photoelectric conversion device of claim 1 or 2, further comprising:
   a normalization processor (21) configured to calculate a value, obtained by adding a count value of the counter (223) over a plurality of unit exposure times and normalizing it, as a number of photons that contributed to occurrence of an avalanche operation in a predetermined frame.

4. The photoelectric conversion device of claim 3, further comprising:
   a linearization processor (24) configured to perform linearization processing for a non-linear range of the number of photons calculated by the normalization processor (21).

5. The photoelectric conversion device of claim 3 or 4, further comprising:
   a calculation processor (140) configured to generate a first intermediate image by adding the count value of the counter (223) over the plurality of unit exposure times and to generate a second intermediate image by performing motion correction processing on the generated first intermediate image.

6. The photoelectric conversion device of any one of claims 1 to 5, further comprising:

a plurality of virtual sensitivity channels ($T_i$) having different time lengths within the unit exposure time, wherein the virtual sensitivity channels ($T_i$) are configured such that one virtual sensitivity channel ($T_i$) includes another virtual sensitivity channel ($T_i$) on a time axis.

7. The photoelectric conversion device of claim 6, wherein:
the different timings are ends of each of the virtual sensitivity channels ($T_i$).

8. The photoelectric conversion device of claim 6 or 7, wherein:
the virtual sensitivity channels ($T_i$) are started at a same timing.

9. The photoelectric conversion device of any one of claims 1 to 8, further comprising
a latch circuit (224) configured to maintain the count value of the counter (223) within the pixel.

10. The photoelectric conversion device of any one of claims 1 to 9, further comprising:

a first substrate; and
a second substrate stacked on the first substrate,
wherein a pixel having the avalanche photodiode (211) is provided on the first substrate, and the recharger (221), the gating circuit (222, 250, 260), and the counter (223) are provided on the second substrate.

11. The photoelectric conversion device of claim 10, further comprising:

a third substrate stacked on the second substrate,
wherein an upper counter (323) connected in series with the counter (223) is provided on the third substrate.

12. The photoelectric conversion device of any one of claims 1 to 11, further comprising:
a frame memory (242) configured to maintain an added value obtained by adding the count value of the counter (223) over a plurality of unit exposure times.

13. The photoelectric conversion device of any one of claims 1 to 12, wherein
the gating circuit (222, 250, 260) is further configured to generate a pulse signal based on an output of the avalanche photodiode (211) at at least one timing selected from the different timings.

14. The photoelectric conversion device of any one of claims 1 to 13, wherein
the gating circuit (222, 250, 260) is further configured to generate a pulse signal based on an output of the avalanche photodiode (211) at a timing corresponding to an end of a virtual sensitivity channel ($T_i$) having highest sensitivity among the different timings.

15. The photoelectric conversion device of any one of claims 1 to 14, further comprising
a sensitivity determiner (230) configured to enable or disable a virtual sensitivity channel ($T_i$) of a predetermined low sensitivity for each pixel.

# FIG. 1

100

EP 4 657 874 A1

# FIG. 2

200

210 LIGHT-RECEIVING 220 230
PULSE

| LIGHT RECEIVER | → | PIXEL CIRCUIT | → | SENSITIVITY DETERMINER | → PIXEL DATA |

FIG. 3

# FIG. 4

| Case | Sensitivity channel | Count value (CNT) | Information per 1 recharge [bit] |
|------|--------------------|--------------------|----------------------------------|
| A | $T_1$ | 0,1 | 1 |
| B | $T_1 \sim T_2$ | 0,1,2 | 1.59 |
| C | $T_1 \sim T_3$ | 0,1,2,3 | 2 |
| D | $T_1 \sim T_4$ | 0,1,2,3,4 | 2.32 |
| E | $T_1 \sim T_5$ | 0,1,2,3,4,5 | 2.59 |
| F | $T_1 \sim T_6$ | 0,1,2,3,4,5,6 | 2.81 |
| G | $T_1 \sim T_7$ | 0,1,2,3,4,5,6,7 | 3 |

# FIG. 5

200

Concept model of incident photon detection using time aperture
imaging algorithm that realizes multiple sensitivities

ND filter corresponding to time aperture ratio

Incident photons
- $T_1$ — No sensitivity — SPAD
- $T_6$
- $T_7$ — Large sensitivity

In-pixel counter

# FIG. 6

# FIG. 7

Various combinations of time aperture ratios of sensitivity channels

| Sensitivity channel | Case 1 TAR | Case 2 TAR | Case 3 TAR |
|---|---|---|---|
| $T_1$ | 1x | 1x | 1x |
| $T_2$ | 1/2x | 1/4x | 1/8x |
| $T_3$ | 1/4x | 1/16x | 1/256x |
| $T_4$ | 1/8x | 1/64x | |
| $T_5$ | 1/16x | 1/256x | |
| $T_6$ | 1/32x | 1/1024x | |
| $T_7$ | 1/64x | | |
| Expansion of DR | + 36.1dB | + 60.2dB | + 48.2dB |
| Bit number of in-pixel counter | 3-bit | 3-bit | 2-bit |

# FIG. 8

## FIG. 9

| Illumination | Case 1 | Case 2 | Case 3 | Dominant sensitivity channel |
|---|---|---|---|---|
| $I_1$ | C1L | C2L | C3L | $T_1$ |
| $I_2$ | C1M(Max) | C2M | C3M | $T_2$ |
| $I_3$ | C1H(Max) | C2H(Max) | C3H | $T_3$ |

# FIG. 10

EP 4 657 874 A1

# FIG. 11

34

# FIG. 12

**Case A**

Time-aperture imaging
parameters for illumination conditions

Time-aperture imaging parameters for scene with standard illumination

Example of purpose/use case

- Photo rate
- Close up (Macro)
- Sports
- Movie
- News
etc.

**Case B**

Time-aperture imaging parameters for dark scene

- Security
- Wildlife Landscape
- Underwater Survey
etc.

**Case C**

Time-aperture imaging parameters for scene with high dynamic range

- Landscapes
- Vehicle-mounted, transportation
- Industrial (furnaces, welding, etc.)
- Aerial, drone photography
- Terrain surveys
- Space observations
etc.

Select any one

Optimized for imaging purpose and imaging conditions

Time-aperture -based SPAD image sensor

EP 4 657 874 A1

# FIG. 13

| Sensitivity ratio | Case A | Case B | Case C |
|---|---|---|---|
| $T_2 / T_1$ | 1/4 | 1/2 | 1/2 |
| $T_3 / T_2$ | 1/4 | 1/2 | 1/2 |
| $T_4 / T_3$ | 1/4 | 1/2 | 1/4 |
| $T_5 / T_4$ | C1L | 1/4 | 1/4 |
| $T_6 / T_5$ | | 1/8 | 1/4 |
| $T_7 / T_6$ | | | 1/4 |

FIG. 14

# FIG. 15

<u>140</u>

# FIG. 16

130

200 — 200 — 131 — 132

**Time-aperture-based SPAD image / image sensor**

- ND filter by TA
- SPAD: $T_1$, $T_6$, $T_7$
- In-pixel counter
- Frame memory

**Time aperture normalization**
TA NORM — 21

**Linearization of transfer function**
TF LIN — 24

- LUT — 23
- Linearization Factor — 22
- Inverse function of aggregated transfer function
  $$Lin(lx)=f^{-1}(TF_{agg,norm}(lx))$$

Preprocessing

Demosaic, AWB, NR, LS, HDR Tone Map etc.
Processing various standard image pipelines

Output Final image

AWB: Auto-White-Balance
NR: Noise Reduction
LS: Lens Shading
HDR: High Dynamic Range

Reference straight line
Unnormalized aggregated transfer function
Normalized aggregated transfer function
MAX
log Count value
Gap G
Log Illumination

Gain correction coefficient
100
1
Log Illumination
Linearization coefficient reference example

Normalized and linearized aggregated transfer function
MAX'
MAX
log Count value
Normalized aggregated transfer function
Log Illumination

EP 4 657 874 A1

# FIG. 17

Example of two-layer configuration

EP 4 657 874 A1

# FIG. 18

Timing chart

First recharge period        Second recharge period

Recharge

Incident photon

$V_c$    HI    LO

$T_1$

$T_2$

$T_3$

RSTB

CHK

OUT

In-pixel counter   2   0   1   2   3   0   1   0

Read latch   2   3   1

▲ Measured photon

⇧ Ignored photon

↑ Count up timing

# FIG. 19

Recharge circuit 221

VEX

Recharge

$C_{d, recharge} = \sim 0.1fF$

Low VDD (<VEX)

Current path during charging

229

$V_c$

OUT

In-pixel counter

Hybrid bonding

$C_{gg,inv} = \sim 0.1fF$

$C_{HB} = \sim 5fF$

Current path during discharging

SPAD 211

$C_{ca,spad} = \sim 0.2fF$

_VBD (~-20V)

VEX : Externally controllable overvoltage (cathode terminal voltage)
VBD : Fixed breakdown voltage (anode terminal voltage)

# FIG. 20

Recharge

Incident photon

↑ Measured photon

⇧ Ignored photon

VEX

Cathode node
potential Vc

$\Delta V = VEX$

~0V

$$P = (V_{BD} + VEX) \cdot (C_{tot} \cdot VEX) \cdot f$$

Ctot : Total capacity at cathode node
f : Recharge frequency
VEX : Voltage oscillation (same as power voltage in this circuit configuration)
VBD : Fixed breakdown voltage (anode terminal voltage)

FIG. 21

Time aperture imaging algorithm

EP 4 657 874 A1

## FIG. 22

Prior art (comparative example)

EP 4 657 874 A1

# FIG. 23

One exposure time unit
(e.g., 4us)

Recharge

$T_1$
$T_2$
$T_3$
$T_4$
$T_5$
$T_6$
$T_7$

At maximum counting rate

7-cnt

Time aperture imaging algorithm

EP 4 657 874 A1

# FIG. 24

1 cluster (~208μs)

~208μs

Recharge

~1μs

40-cnt

At maximum counting rate

~125-cnt

Prior art (comparative example)

EP 4 657 874 A1

# FIG. 25

## Example of three-layer configuration

Third-layer in-pixel counter
323

SEL
325

200

Second-layer in-pixel counter
223

nTSV
Junction

Output bus
328

RSTB

Recharge circuit
221

Gating circuit
222

BITSEL

Recharge

$V_C$

OUT

RSTB

Hybrid bonding

CHK

APD(SPAD)
211

Light receiver
210

EP 4 657 874 A1

# FIG. 26

Timing chart

Setting second-layer in-pixel counter to two bits and third-layer in-pixel counter to one bit

EP 4 657 874 A1

# FIG. 27

EP 4 657 874 A1

# FIG. 28

**Second layer of two-layer configuration**

242

Frame memory

244 — Pixel counter array

Column processor
241

Frame memory

---

**Second layer and second layer of three-layer configuration**

244

242

(Third layer)

Frame memory

Pixel counter array

Column processor
241

(Second layer)

EP 4 657 874 A1

# FIG. 29

Recharge circuit
221

Recharge

Gating circuit
250

Vc

OUT

OUT2

Hybrid bonding

CHK
251

EN_LS
252

SPAD
211

# FIG. 30

EP 4 657 874 A1

FIG. 31

# FIG. 32

Example of three-layer configuration

# FIG. 33

# FIG. 34

Another example of first gating circuit 260

# FIG. 35

Example of three-layer configuration

FIG. 36

Incident photon

HRT     LO     HI

In-pixel
counter value   6 7 7

Example of high photon rate

Incident photon

HRT     LO

In-pixel
counter value   1 0 0

Example of low photon rate

# FIG. 37

Example of three-layer configuration

Second-layer in-pixel counter

Recharge circuit 221

First gating circuit 222

SPAD 211

210

Second gating circuit 227

Lock flag circuit 226

Lock flag

SEL 225

BITSEL

RSTB

Output bus 228

Feedback bus 291

Recharge

EN_FBK

Column processor 241

Frame memory 242

Threshold determination circuit 243

>=256?

R    W

240

EP 4 657 874 A1

# FIG. 38

<u>280</u>

From pixel

First converter 283

First column processor 285

High-sensitivity frame memory
281

R    W

Second converter 284

Second column processor
286

Low-sensitivity
frame memory
282

R    W

# FIG. 39

One exposure time unit

Recharge

T$_1$ — 1x

T$_2$ — 1/4x

T$_3$ — 1/16x

| | | | |
|---|---|---|---|
| Pixel value | 3 | 2 | 1 |
| High-sensitivity count value | 1 | 1 | 1 |
| Low-sensitivity count value | 2 | 1 | 1 |

▨ Time aperture period

▼ Start of exposure (SOE)

▲ End of exposure (EOE) and checking timing

EP 4 657 874 A1

FIG. 40

Count value after converter for pixel data

| Pixel value | 3 | 2 | 1 | 0 |
|---|---|---|---|---|
| High-sensitivity count value | 1 | 1 | 1 | 0 |
| Low-sensitivity count value | 2 | 1 | 0 | 0 |

## EUROPEAN SEARCH REPORT

**Application Number**

EP 25 15 9353

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | TAKATSUKA T ET AL: "A 3.36 m-pitch SPAD photon-counting image sensor using clustered multi-cycle clocked recharging technique with intermediate most-significant-bit readout", 2023 IEEE SYMPOSIUM ON VLSI TECHNOLOGY AND CIRCUITS (VLSI TECHNOLOGY AND CIRCUITS), JSAP, 11 June 2023 (2023-06-11), pages 1-2, XP034383278, DOI: 10.23919/VLSITECHNOLOGYANDCIR57934.2023.10185241 [retrieved on 2023-07-24] * Section "Architecture and Operation"; page 1; figures 1,2,3 * | 1-15 | INV. H04N25/773 H04N25/40 H04N25/78 H04N25/79 |
| A | US 2022/006965 A1 (ZHU HONGBO [JP]) 6 January 2022 (2022-01-06) * paragraph [0050] - paragraph [0119]; figures 1-13 * | 1-15 | |
| A | Al Abbas Tarek: "Miniature High Dynamic Range Time-Resolved CMOS SPAD Image Sensors", , 3 July 2019 (2019-07-03), pages 1-302, XP055910772, Retrieved from the Internet: URL:https://core.ac.uk/download/pdf/429736111.pdf [retrieved on 2022-04-08] * Sections "3.2.4 Pixel Circuit Design" to "3.2.7 Time Gating Logic"; page 119 - page 132; figures 3.2.10 - 3.2.20 * | 1-9, 12-15 | TECHNICAL FIELDS SEARCHED (IPC) H04N |

The present search report has been drawn up for all claims

| Place of search | Date of completion of the search | Examiner |
|---|---|---|
| Munich | 25 June 2025 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9353

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | Publication date | Patent family member(s) | Publication date |
|---|---|---|---|
| US 2022006965 A1 | 06-01-2022 | JP 2020096347 A | 18-06-2020 |
| | | US 2022006965 A1 | 06-01-2022 |
| | | WO 2020110484 A1 | 04-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. TAKATSUKA et al.** A 3.36$\mu$m-pitch SPAD photon-counting image sensor using clustered multi-cycle clocked recharging technique with intermediate most-significant-bit readout. *2023 IEEE Symposium on VLSI Technology and Circuits*, 2023